**Europäisches Patentamt**

**European Patent Office**

**Office européen des brevets**

(11) Veröffentlichungsnummer: **0 127 146**
A2

# (12) EUROPÄISCHE PATENTANMELDUNG

(21) Anmeldenummer: 84105952.0

(22) Anmeldetag: 24.05.84

(51) Int. Cl.³: **B 62 D 53/02**
B 62 D 53/12, B 62 D 47/02
B 62 D 49/00, B 62 D 61/12
B 62 D 59/04, B 62 D 13/06

(30) Priorität: 27.05.83 DE 3319191

(43) Veröffentlichungstag der Anmeldung:
05.12.84 Patentblatt 84/49

(84) Benannte Vertragsstaaten:
AT BE DE FR GB IT SE

(71) Anmelder: Carl Kaelble Gesellschaft mit beschränkter
Haftung
Wilhelmstrasse 44 Postfach 1330
D-7150 Backnang(DE)

(72) Erfinder: Fink, Erwin, Dipl.-Ing.
Keltenstrasse 3
D-7141 Grossbottwar(DE)

(72) Erfinder: Ebinger, Gerhard
Kirchberger Strasse 38
D-7152 Aspach 2(DE)

(74) Vertreter: Utermann, Gerd, Dipl.-Ing.
Kilianstrasse 7 Kilianspassage Postfach 3525
D-7100 Heilbronn(DE)

(54) Gleisloses Untertagefahrzeug.

(57) Das gleisloses Untertagefahrzeug (10) hat ein Antriebsfahrzeug (11) mit Wendesitz (22) und zwei Lenkrädern (21.1, 21.2) sowie angetriebenen Antriebsrädern (19) und einem lenkbaren, ausschwenkbaren Spornrad (26), eine Knicklenkung (14) und eine dahinter liegende Kupplung (13) mit mechanischen Haltemitteln (44) und fernbetätigbaren hydraulischen und ggf. elektrischen Steckverbindern, über welche Arbeits- und Beförderungsteile (12) starr mit dem Antriebsfahrzeug (11), jedoch über die Knicklenkung (14) lenkbar und über ein Drehgelenk verdrehbar miteinander verbunden sind. Arbeits- und Beförderungsteile (12) sind austauschbar durch Fernbetätigung der Kupplung (13) von den verschiedenen Führerständen aus. Das Fahrzeug ist von den verschiedenen Führerständen auch aus lenkbar. Arbeits- und Beförderungsteile (12) haben vorzugsweise lenkbare Räder (48). Die Kupplung (13) hat leckölfreie Steckverbinder.

FIG.2

EP 0 127 146 A2

## PATENTANWALT DIPL.-ING. GERD UTERMANN
71 HEILBRONN, Postfach 3525, Kilianstr. 7 (Kilianspassage)
Tel. (07131) 82828, Telex/Teletex 728 814 patu d
BW-Bank Heilbronn: 701 17106 00 (BLZ 620 300 50) Postscheck Stuttgart: 43016-704

Europäische Patentanmeldung               K 42. 12 EP 27
                                          24. Mai 1984/1S

Anmelder:      Carl Kaelble, Gesellschaft
               mit beschränkter Haftung

               Wilhelmstraße 44
               Postfach      1320

               D-7150 Backnang

Bezeichnung:   Gleisloses Untertagefahrzeug


Beschreibung:

Die Erfindung betrifft ein gleisloses Untertagefahrzeug
mit einer Energieversorgung und zwei Hauptantriebsrädern
sowie mit wenigstens einem Führerstand ausgerüstetem
Antriebsfahrzeug und ankuppelbaren Arbeits- und
Beförderungsteilen mit zwei Rädern und Abstützmitteln
für den gekuppelten Zustand.

./2

**0127146**

Es ist eine Vielzahl von Fahrzeugen bekannt, die aus mehreren Teilen wahlweise zusammengesetzt werden können. Solche Fahrzeuge sind vor allem in der Landwirtschaft und im Tiefbau vielfältig in Verwendung. Sie werden zumeist manuell durch Steckverbindungen oder sonstige manuell zu bedienende Kupplungsteile miteinander nach dem jeweiligen Einsatzzweck vereinigt. Auch werden die notwendigen Verbindungselemente hydraulischer und elektrischer Leitungen zumeist von Hand vereinigt und getrennt.

Unter den Fahrzeugen für allgemeine Verwendung kommt der schematische Vorschlag nach DE-PS 23 22 504 der Erfindung am nächsten. Sie zeigt ein Fahrzeug mit Knicklenkung, welches aus zwei Fahrzeugteilen besteht, die je eine Achse mit je zwei Rädern aufweisen, wobei das eine Fahrzeugteil Antriebssysteme, Fahrersitz, Lenkrad und im Bereich der Knicklenkung ein manuell betätigbares Stützrad aufweist. Die mit Lenkzylindern ausgestattete Knicklenkung trägt eine Kupplungsplatte, an welcher das andere Fahrzeugteil ankuppelbar ist. Dieses Grundschema gestattet den Anschluß der verschiedensten Fahrzeugteile mit Arbeitsaufbauten. Weitere Gestaltungseinzelheiten, die einen Einsatz unter den beengten Verhältnissen unter Tage gestatten würden, sind nicht behandelt. So hat das Fahrzeug nur die üblichen Lenkmöglichkeiten wie ein einheitliches Fahrzeug mit Knicklenkung.

Für den Untertageeinsatz geht aus der DE-OS 24 50 573 ein mit Knicklenkung, jedoch ohne Kupplung der Teile ausgestattetes Untertagefahrzeug hervor. Dieses ist mit hydrostatischem Einzelantrieb aller Räder ausgestattet und es sind im wesentlichen ein Antriebs- und Lenkschema, nicht jedoch die konstruktive Gestaltung für ein Untertagefahrzeug behandelt.

Die Bergbauforschung GmbH, Essen hat in der Zeit von 1976 bis April 1978 ein Forschungsvorhaben "Gleislos-Technik im Steinkohlenbergbau unter Tage" durchgeführt und dazu eine umfangreiche Studie vorgelegt, die verschiedene übliche Antriebs- und Lenksysteme und Konstruktionen behandelt sowie Anregungen für Weiterentwicklungen gibt.

Ferner ist aus der beiliegenden Druckschrift"P 14 T 40 France loader - l'équipement minier" ein Fahrzeugsystem mit einem Antriebsfahrzeug und austauschbaren Arbeits- und Beförderungsteilen bekannt. Beide haben jeweils etwa in der Mitte ihre Achsen und eine Knicklenkung. Sie können im Knickgelenk voneinander getrennt werden. Die Fahr- und Nutzungsmöglichkeiten dieser Fahrzeugkombination sind begrenzt, weil nur ein Fahrersitz vorhanden ist und die Arbeits- und Beförderungsteile relativ kurz und durch die etwa in der Mitte liegende Achse in ihren Kurvenfahrmöglichkeiten und Beladungsmöglichkeiten stark eingeschränkt sind.

Aus der Straßenfahrzeug-Konstruktion sind beispielsweise bei Gliederzügen von Omnibussen Lenkmöglichkeiten und Lenksysteme für die Hinterräder des nachlaufenden Teiles auch in Verbindung mit der Lenkung der Vorderräder bekannt. Diese Fahrzeuge haben jedoch mehr als zwei Achsen (DE-OS 28 10 651) und sind für den Untertageeinsatz nicht geeignet.

Aus der DE-OS 28 10 112 ist ein Untertagefahrzeug mit wegbeweg- barem Spornrad und mit am Knickgelenk und am anderen Ende des Antriebsteiles ankuppelbaren Zusatzteilen bekannt. Das Abkuppeln und Ankuppeln der Teile muß manuell erfolgen. Eine optimale Lösung für Kurvenfahrt in beengten Verhältnissen ist nicht behandelt.

Aus DE-OS 24 22 809 ist ein Zugfahrzeug, das mit jedem von mehreren Gerätefahrzeugen starr kuppelbar ist, bekannt. Hier ist ein vierrädriges, selbstfahrendes Fahrzeug dargestellt, welches mit zweirädrigen Gerätefahrzeugen wahlweise über großräumige und großvolumige mechanische Kupplungen verbunden werden kann. Diese haben entweder die aus der Fahrzeugtechnik allgemein bekannten Einsteckschuhverbindungen mit entsprechenden Bolzenverriegelungen oder Anlageflächen und mit Zylindern betätigte Hintergreifhaken. Außerdem ist in dieser OS eine zusammenwirkende Mediumskupplungseinrichtung auf jeder Einheit der Fahrzeugkombination mit einer Vielzahl von Verbindern auf der einen Einheit zum entsprechenden Verbinden mit den Verbindungsteilen auf der anderen Einheit, im wesentlichen koaxial zueinander angeordnet. Der eine Teil dieser Steckeinrichtungen ist manuell über eine Hebelgestänge zum Einkuppeln und Auskuppeln verschiebbar. Dabei werden in einem abgeschlossenen Raum die Steckverbinder, welche sich berührende und beim Verschieben öffnende bzw. schließende Kegelrückdrückventile enthalten, in abgedichteten Hülsen ineinander geschoben. Diese Art des Verbindens der Mediumleitungen ist für Druckluftleitungen vertretbar. Für die Kupplung einer Vielzahl mit größeren Durchtrittsquerschnitten ausgestatteten Hydraulikleitungen jedoch ungeeignet, weil beim Öffnen stets der dem Hub der Verschlußelemente entsprechende Volumenanteil als Lecköl austritt. Auch ist die Gesamtanordnung von mechanischer Kupplung und Leitungskupplungen nicht so getroffen, daß sie für einen schnellen Wechsel zwischen Fahrzeugteilen von einem vor allem auch entfernt liegenden Führerstand geeignet wäre.

Der Erfindung liegt vor allem die Aufgabe zugrunde, für den Untertagebetrieb ein gleisloses Fahrzeug mit eingangs genannten Merkmalen für besonders beengte Raumverhältnisse und für Vorwärts- und Rückwärtsfahrt bei guten Sichtverhältnissen für den Fahrer so auszugestalten, daß die Fahrleistung des Antriebsfahrzeuges bei Verwendung mit austauschbaren Arbeits- und Beförderungsteilen besser genutzt und ein relativ langbauendes Gesamtfahrzeug ermöglicht werden kann.

Erfindungsgemäß sind die folgenden Merkmale vorgesehen:

- Das Antriebsfahrzeug weist ein lenkbares und vom Boden abhebbares Spornrad auf;
- Antriebs- und Energieversorgungsaggregate liegen zwischen Spornrad und Führerstand;
- der Führerstand ist derart ausgestaltet, daß die Bedienung der Schalt- und Steuermittel bei nach beiden Fahrtrichtungen gewandtem Fahrer gut zugänglich sind;
- das Antriebsfahrzeug hat eine Gesamthöhe von wenig mehr als einem aufrecht stehenden Menschen;
- die oberen Begrenzungen der Energieversorgungs- bzw. Antriebsaggregate und Lenkmittel liegen im gesamten Vorderbereich unterhalb der Sichtlinie des Fahrers, welche bei etwa 10 bis 15 m den Boden trifft;
- Antriebsfahrzeug und Arbeits- und Beförderungsteil sind über ein Knickgelenk mit Lenkzylindern und eine Trennkupplung verbunden;
- im Endbereich wenigstens eines Arbeits- und Beförderungsteiles sind lenkbare Räder vorgesehen;
- die lenkbaren Räder des Arbeits- und Beförderungsteiles sind antreibbar .

Ferner kann vorteilhaft das Untertagefahrzeug im Grundriß von Antriebsfahrzeug und wenigstens einem Arbeits- und Beförderungsteil im Bereich der Ecken der Enden des zusammengekuppelten Fahrzeuges entsprechend dem kleinsten Wendekreis nahe den äußersten Rädern nur geringfügig über die eingeschlagenen Räder überstehend abgeschnitten sein.

An dem neuen Fahrzeug ist eine Vielzahl von zum Teil für sich bekannten Merkmalen so zusammengefaßt, daß sich ein optimal gestaltetes Fahrzeug ergibt, wie es bisher für den Untertageeinsatz nicht verfügbar war. Dieses ergibt sich durch das günstige Zusammenwirken mehrerer Einzelmerkmale. Dadurch, daß man einen Zwei-Achs-Fahrbetrieb gewählt hat, ist der Gesamtaufwand relativ gering. Während die bisherigen Fahrzeuge nur die Knicklenkung beim Zwei-Achs-Fahrbetrieb wählten und dadurch für enge Kurvenfahrt nur relativ kurz bauen konnten, ist die Knicklenkung nunmehr mit einer Lenkung der Räder im Endbereich des Arbeits- und Beförderungsteils vereinigt worden, die aber nur in Sonderfällen benutzt zu werden braucht, dann nämlich, wenn enge Kurvenfahrt erforderlich ist. Die Grundrißgestaltung berücksichtigt zudem diese Verhältnisse, damit nicht überstehende Ecken, die Fahrt in engen Kurven behindern. Die Möglichkeit vier Räder anzutreiben, verbessert die Kraftübertragung auch bei ungünstigen Bodenverhältnissen und hat auch vorteilhaften Einfluß auf die Lenkbarkeit des Fahrzeuges unter schwierigen Verhältnissen. Der Einsatz eines vom Boden abhebbaren Spornrades gestattet es, daß Antriebsfahrzeug allein günstig zu fahren, behindert jedoch nicht bei zusammengekuppeltem Fahrzeug. Durch den Einsatz einer Trennkupplung ausser dem Knickgelenk kann einerseits das Knickgelenk mit der notwendigen Stabilität und ohne die Gefahr von Verunreinigungen nach den Bedürfnissen für Knickung und Lenkung gestaltet werden und zum anderen ist es jedoch möglich, Trennkupplungen für die Fahrzeuge nach den Bedürfnissen für den Anschluß der verschiedensten Arbeits- und Beförderungsteile vor allem aber für das schnelle,ggf. automatische Wechseln und Kuppeln aller erforderlichen Elemente zu gestalten. Die glückliche Vereinigung dieser wesentlichen Elemente hat ein Fahrzeug geschaffen, welches den Bedürfnissen des Untertagebetriebes bei beengten Platzverhältnissen besonders gut gerecht wird und die Kosten für Arbeits- und Beförderungsteile, und die damit fest verbundenen Elemente unter Berücksichtigung optimaler Arbeitsbedingungen relativ gering
hält. Seine Fahrleistung kann wesentlich besser genutzt werden.

Das Antriebsfahrzeug wird zweckmäßig mit einem schlagwettergeschützten Antriebsaggregat mit Hydraulikpumpen
ausgestattet und alle Funktionen für Lenkung, Kupplung
und Antrieb werden zweckmäßig hydraulisch bewirkt. Auch
die gesamten elektrischen, mechanischen und hydraulischen
Einrichtungen sind schlagwettergeschützt zu gestalten.

Für die Gestaltung des vom Boden abhebbaren Spornrades
gibt es mehrere in der Technik bekannte Möglichkeiten.
Besonders günstig ist ein einschwenkbares und lenkbares
Spornrad, welches vor den Antriebsaggregaten angeordnet
ist. Dadurch ergibt sich eine gute Abstützung des Antriebsfahrzeuges, wenn es allein fährt. Da das Spornrad mit seinen notwendigen Stütz- und Betätigungsteilen
nur einen geringen Teil der Fahrzeugbreite einnimmt,
ist es am vorderen Ende des Fahrzeuges deshalb am besten
untergebracht, weil dann die Eckbereiche des Grundrißes
wegfallen können, während die Antriebsaggregate und die
Hauptantriebsräder sowie das Fahrerhaus die ganze Breite
einnehmen können und wegen der Vielzahl notwendiger
Aggregate auch einnehmen müssen, zumal wegen der guten
Sicht des Fahrers die Antriebsaggregate nicht zu hoch
gelegt werden dürfen. Der Führerstand sollte auch im Bereich der Kupplung und nicht am entgegengesetzten Ende
des Antriebsfahrzeuges angeordnet sein, damit der Fahrer
beim Kuppeln gute Sicht auf die Kupplung hat.

Für die Anordnung der angetriebenen Haupträder am Antriebsfahrzeug gibt es verschiedene Möglichkeiten. Hier
ist eine Lösung gewählt, bei der die angetriebenen Haupträder des Antriebfahrzeuges im Bereich des einen Endes
liegen und zwar dem stabilen Knickgelenk mit Vertikalachse benachbart sind und wobei die Lenkzylinder im

.../8

01.27146

Bereich unmittelbar hinter den Rädern angelenkt sind.
Die Verstellzylinder wiederum greifen an den antriebsfahrzeugfesten Teil der Kupplung an. So sind einerseits
gute Lenkmöglichkeiten gegeben und andererseits ist
eine günstige Lastverteilung sowohl bei gekuppeltem
Fahrzeug als auch beim Alleinfahren des Antriebsfahrzeuges
gegeben, weil der schwere Antriebsaggregatsteil entweder
einen Ausgleich zum Arbeits- und Beförderungsteil bietet
oder zwischen den Abstützungen des Antriebsfahrzeuges
liegt. Das Antriebsfahrzeug sollte zweckmäßig einen
Wendesitz und zwei Lenkräder aufweisen. So sind gute
Sicht- und Fahrverhältnisse sowohl für das Antriebsfahrzeug allein als auch für das Arbeiten mit angekuppelten Antriebs- und Beförderungsteilen gegeben.

Die räumlich begrenzten Verhältnisse in vielen Zechen
erfordern ein Fahrzeug von geringer Höhe und guter
Manövrier- und Fahrfähigkeit. Da man ohnehin großvolumige Reifen benötigt, die Aggregate ohnehin auf
den rauhen Stoßbetrieb auszulegen sind und der Fahrer
auf einem gefederten Sitz sitzt, kann man auf die
Federung des Fahrzeuges zwischen Radlagern und Rahmen
verzichten, die bei normalen Fahrzeugen einen beträchtlichen Hub benötigen. Das führt jedoch dazu, daß man
einen Ausgleich schaffen muß, damit sämtliche Räder
stets Bodenhaftung haben können. Bei dem allein fahrenden
Antriebsfahrzeug ist das durch die Dreiradkonstruktion
gewährleistet. Wenn jedoch mit eingezogenem Spornrad und
angekuppeltem Arbeits- und Beförderungsteil gefahren
wird, so ist der Zwei-Achs-Betrieb bzw. Vierradbetrieb
als optimale Lösung gewählt. Bei Verzicht auf Federung
gegenüber dem Rahmen ist unter Berücksichtigung der oft
unebenen Streckenverhältnisse dann jedoch eine Drehverbindung an geeigneter Stelle vorzusehen, die das Anheben
eines Rades und ggf. Absenken auf der anderen Seite ermöglicht. Das kann ggf. im Bereich der Achsen vorgesehen
sein, würde dann jedoch zum Höhenverlust führen. Eine
besonders vorteilhafte Lösung sieht vor, daß beide Fahrzeugteile um eine horizontale Drehgelenkachse drehbar miteinander
verbunden sind. Dieses Drehgelenk wird zweckmäßig mit
dem Knickgelenk und der Kupplung vereinigt und kann in
der in den weiteren Teilen der Unterlagen gegebenen
Beschreibung ausgeführt sein.

./9

Für ein Fahrzeug bzw. eine Kombination verschiedener Fahrzeugteile, die oft untereinander ausgetauscht werden sollen und die sowohl mechanisch als auch für alle notwendigen Versorgungs- und Steuerleitungen jeweils zu kuppeln bzw. zu entkuppeln sind, besteht ein Bedürfnis nach einer sicher arbeitenden und vom beliebig angeordneten Führerstand aus bedienbaren Mehrfachkupplung. So ist ein wesentliches Element des ganzen Fahrzeuges die Kupplung zwischen Antriebsfahrzeug einerseits und Arbeits- und Beförderungsteilen andererseits. Während diese Kupplungen bisher zumeist von Hand mit Steck- und/oder Umgreifelementen gestaltet wurden und in der Regel die Hydraulikverbindungen und/oder elektrischen Steckverbindungen getrennt herzustellen waren, sieht die Erfindung nunmehr eine Kupplung mit die gesamten mechanischen Kräfte aufnehmenden Eingriffselementen und beim Öffnen verschließenden hydraulischen Steckverbindern vor. Damit sind alle Trennelemente, die für den Fahrbetrieb wesentlich sind, in einer Einheit verbunden. Die notwendigen Bewegungen werden zweckmäßig hydraulisch ferngesteuert vom Fahrersitz aus betätigt. So kann eine einzige Person die Fahrzeugeinheit trennen, zu einer anderen Einheit vereinigen und fahren bzw. mit ihr die notwendigen Greif- und Ladearbeiten durchführen. Dabei braucht der Fahrer seinen Sitz zum Kuppeln und Entkuppeln nicht zu verlassen.

Mehrfachkupplungen für Fahrzeugteile benötigen in der Regel außer den hydraulischen Steckverbindern auch Steckverbindungen für andere Energieformen, insbesondere für elektrische Lichtversorgungs- und Steuerleitungen sowie ggf. für Pneumatikleitungen. Diese können in eine erfindungsgemäß ausgebildete Kupplung gut integriert werden. Dazu sieht man vor, daß in den Kupplungsgrundkörpern die Steckelemente elektrischer Steckverbindungen mit gleicher Steckrichtung wie die hydraulischen Steckverbinder angeordnet sind. Gleiches gilt ggf. für pneumatische Steckverbinder. Diese können in der üblichen Weise ausgebildet sein, weil bei pneumatischen Steckverbindungen kein nennenswerter Trennverlust auftritt.

0127146

Im Rahmen der Aufgabe der Erfindung ist unter Einbeziehung des Bedürfnisses nach einer Mehrfachkupplung für die Teile von hydraulisch angetriebenen und/oder betätigten Fahrzeugeinrichtungen eine solche, vor allem so auszugestalten, daß eine Vielzahl auch zum Teil großvolumiger Leitungsverbindungen sicher abgeschlossen, leckölfrei getrennt und schnell fernbetätigt auch mit einer anderen Einheit von Steckverbinderteilen vereinigt werden kann und wobei auch andere Leitungsverbindungen mitgesteckt und/oder die mechanischen Ausricht- und Kupplungs- sowie Entkupplungsvorgänge vorgenommen werden können. Dafür weisen gemäß einer vorteilhaften Ausgestaltung der Erfindung die Steckverbinder je Leitung im einen Teil eine Schiebehülse und einen ihre Zentralöffnung verschließenden feststehenden Zentraldichtkolben und im anderen Kupplungsteil einen beweglichen Zentraldichtkolben und eine feststehende Kupplungshülse auf. Durch diese wechselweise Anordnung von feststehendem Mittelteil und verschiebbarer Hülse bzw. verschiebbarem Mittelteil und feststehender Hülse ist es möglich, die Dichtflächen in den vordersten Bereich der aufeinander treffenden Steckverbinderelemente zu verlegen und mit Dichtkolben in Dichthülsen zu arbeiten, die erst dann auseinander zu fahren beginnen, wenn der Abdichtvorgang beendet ist und die dafür keinen Freiraum benötigen, sondern alles im Zwischenraum befindliche Öl vor dem Öffnen völlig verdrängen, so daß kein Lecköl mehr austreten kann. Solche für andere Zwecke im Grundaufbau an sich bekannte Steckverbinder werden nun auch hier eingesetzt, wo man sehr häufig und vor allem immer an der gleichen Stelle kuppeln muß, an der bei den bisher allgemein üblichen Steckverbindern zu viel Lecköl austreten würde, welches zur Verunreinigung des Bodens nach Art eines Sumpfes und zu einer untragbaren Umweltverschmutzung führen würde. Durch diese Art der Ausbildung des Verschlusses im Bereich der Steckverbinder ist es nun auch möglich, Leitungen mit sehr großen Durchflußquerschnitten zu stecken und zu öffnen, so daß auch die für den Vortrieb schwerer Fahrzeuge notwendigen Ölmengen und die für die Betätigung großer Arbeits- und Hilfseinrichtungen mit großen Kräften und langen Wegen erforderlichen Ölmengen bei Fahrzeugen mit abtrennbaren Teilen durch Steckverbinder-Kupplungen fließen können und die für eine Vielzahl von Lenk- und Steuerbewegungen erforderlichen Ölströme, wie sie an einem trennbaren, für viele Einsatzzwecke geeigneten Fahrzeug notwendig sind, über häufig zu betätigende Steckverbinder geleitet werden können, ohne daß Ölverlust eintritt. Die einzelnen Elemente der Steckverbinder sind in Ausbildung, Herstellung und Montage einfach und von sicherer Funktion, weil nur zylindrische axial schiebbare Teile benötigt werden. Diese haben zudem den Vorteil durch die Schiebebewegungen und den Wegfall von Schrägteilen selbstreinigend zu sein. Da in der Regel ausreichend lange Schiebewege zur Verfügung stehen und ohnehin große Räume für den mechanischen Aufbau benötigt werden, können die Durchtrittsquerschnitte auch in der jeweils benötigten Größe gut ermöglicht werden, ohne daß Drosselverluste und damit lokale Erwärmungen im Bereich der Steckverbinder auftreten. Die Einzelteile sind auch reparaturfreundlich und erfordern keinen höheren Aufwand als bisherige Einzelsteckverbinder je Leitung. Sie können konstruktiv in vielerlei Art gestaltet und je nach benötigter Anzahl und Größe der Leitungen auf dem zur Verfügung stehenden Raum und entsprechend den Anschlüssen und ggf. notwendigen Bewegungen der Leitungen derart angeordnet werden, daß die einzelnen Steckverbinderelemente einander passend gegenüberstehen. Bei ungewollten Verschmutzungen können sie leicht gereinigt werden, ohne daß Schmutz in das Hydrauliksystem gelangt. Die Verschlußflächen sind im geöffneten Zustand auch gut einzusehen und können vom Bedienungspersonal auf Sauberkeit und Dichtheit gut kontrolliert werden. Die Steckverbindung benötigt auch keine nennenswerte größeren Hubwege mit Ausnahme der Länge der Dichtfläche, so daß auch ihrem Einbau diesbezüglich kaum Hindernisse im Wege stehen dürften. Die konstruktive Gestaltung kann den jeweiligen Benutzungs- und Einbau- sowie Herstellungs- und Wartungsverhältnisse entsprechend vielfältig gestaltet werden.

Eine vorteilhafte Gestaltung sieht vor, daß Zentraldichtkolben und feststehende verschiebbare Kupplungshülsen in der Trennstellung in einer gemeinsamen Ebene je Hydraulikleitung enden und alle Schiebeelemente der Steckverbinder gleiche Schiebewege haben. Dann kann die Anordnung so getroffen werden, daß die Elemente eines Kupplungsteiles in der entkuppelten Stellung in einer Ebene liegen und eine völlig glatte Fläche bilden, die auch gut gereinigt werden kann, während aus der anderen Fläche nur die entsprechenden feststehenden Kupplungshülsen mit ihren innen liegenden beweglichen Dichtkolben herausstehen. Auch sind für die einzelnen Steckverbinder dann keine unterschiedlichen Hubwege erforderlich, sondern diese können jeweils in einem einheitlichen Tragkörper für die Steckverbinder gemeinsam gelagert sein und diese Tragkörper brauchen nur entsprechend gegeneinander bewegt zu werden.

Die Schiebebewegungen der Schiebehülsen und beweglichen Zentraldichtkolben werden einerseits durch die gesamte Kupplungsbewegung bewirkt und können andererseits durch entsprechende Bewegungsorgange, durch hydraulische Stellmittel oder dgl. vorgenommen werden. Besonders einfach, sicher und zweckmäßig ist die Konstruktion, wenn den Schiebehülsen und den beweglichen Zentraldichtkolben Druckfedern zugeordnet sind, gegen deren Kraft sie beim Einkuppeln verschoben und mittels deren Kraft sie beim

**0127146**

Entkuppeln in die Endstellung bzw. Verschlußstellung zurückgeschoben werden. Solche Federn sind hier deshalb nicht unbedingt notwendig, weil es sich nicht um federgeschlossene Dichtelemente handelt, sondern um Schiebekolben, die auch ohne Federkraft dichthalten. Sie sind konstruktiv und benutzungstechnisch jedoch vorteilhaft.

Der feststehenden Kupplungshülse jedes Steckverbinders ordnet man zweckmäßig eine gegen Federkraft verschiebbare Schutzhülse zu, die die Mantelfläche der Kupplungshülse mit einem Schmutzabstreifer umgibt und gegen Federkraft beim Einkuppeln zurückgeschoben wird. So werden auch die aus dem Tragkörper der Steckverbinder notwendigerweise in der entkuppelten Stellung heraustehenden Kupplungshülsen gegen Verschmutzung geschützt und ihre äußeren Dichtflächen können beim Kupplungsvorgang gereinigt in die gegenüberliegende Dichtung eintreten. Die Stirnseiten der feststehenden Hülsen und der Schutzhülsen können bei evtl. Verschmutzung leicht gereinigt werden, was für den Einsatzzweck dieser Kupplungen, die im rauhen Betrieb des Bergbaus und des sonstigen Tiefbaus eingesetzt werden sollen, von Wichtigkeit ist und was bei bisherigen Steckverbindern zumindest für einen Teil, nämlich den, in welchen hineingesteckt wurde, nicht gegeben war, wodurch Reinigungsarbeiten sehr aufwendig waren und die Gefahr der Verschmutzung des Hydrauliköles und damit der Beschädigung von wichtigen Steuerteilen gegeben war.

Die Steckverbinder und/oder ihre Tragkörper sind in Kupplungsgrundkörpern unterzubringen. Diese haben in der Regel auch weitere Aufgaben zu erfüllen, wie beispielsweise das mechanische Ausrichten, Zentrieren, Indexieren und Zusammenhalten. Auch diese haben naturgemäß Trennflächen, die zweckmäßig als Ebenen gestaltet sind. Es ist dann besonders vorteilhaft, die Trennebene der Kupplungsgrundkörper und die Trennebene der Steckverbinder zumindest im gekuppelten Zustand zusammenfallen zu lassen. Für den einen nicht verschiebbaren Teil gilt das dann auch im entkuppelten Zustand, während es für den anderen schiebbaren Teil für den entkuppelten Zustand nicht gilt. So gibt es jedoch nur eine, dem Schiebeweg entsprechende Stufe im Bereich der Kupplung. Zu Reinigungszwecken kann durch Ausfahren des Tragkörpers für die Steckverbinder dieser in die Kupplungsebene gebracht werden. Die zentralen Dichtkolben weisen zweckmäßig, elastische Dichtelemente auf, die allein oder in Verbindung mit den zylindrischen Kolbenflächen die Abdichtung in den Verschlußstellungen auch über längere Zeit sichern. Diese Leitungen stehen im Schaltzustand und entkuppelten Zustand nicht unter Hochdruck Für die Abdichtungen zwischen den feststehenden Öffnungsbegrenzungen und den feststehenden Kupplungshülsen des anderen Teils sind in den feststehenden Steckverbinderbohrungen, in welchen sich die Schiebehülsen bewegen, Hochdruckdichtungen vorgesehen, weil nur diese dem Betriebsdruck gegenüber abdichten müssen, während alle anderen Teile, einschließlich der Federn bezüglich des Betriebsdruckes entlastet sind.

Die hydraulischen Steckverbinder können ohne Beschädigung und problemlos nahezu nur dann geschaltet werden, wenn geeignete mechanische Zentrier- und Kupplungs- sowie Haltemittel vorgesehen sind. Diese können auf vierlei in der Technik bekannte Arten realisiert werden, mit konischen Schrägflächen, in Form von Mehrkanten oder mit profilierten unrunden Körpern. In den Kupplungskörpern sieht man gemäß einer zweckmäßigen Ausgestaltung der Erfindung mindestens zwei Paare von zueinander passenden Zentrierzapfen und Zentrieraufnahmeöffnungen vor, die vorzugsweise bezüglich des Mittelpunktes der ganzen Kupplung diagonal gegenüberliegend angeordnet sind. Die Zentrierzapfen und die Zentrieraufnahmeöffnungen sind an ihren äußeren Enden zweckmäßig mit entsprechend geneigten Flächen versehen, damit sie beim Einführen auch bei nicht genau deckungsgleicher Position ineinander geführt werden können und die Zentrierung vornehmen. Das ist insbesondere für Kupplungen wichtig, die an selbstfahrenden Fahrzeugteilen angeordnet sind, welche vom Fahrer mit Hilfe der üblichen Lenkung in die Kuppelposition gebracht werden. Dafür sind relativ große Neigungsbereiche und gute Abrundungen erforderlich.

Da die Kupplungselemente nicht für von Hand oder durch besondere Vorrichtungen anzubauende Teile verwendet werden, wobei eine manuelle oder durch fremde Hebezeuge oder dgl. vorgenommene Ausrichtung möglich ist, sondern als Kupplungsteile an selbstfahrenden Fahrzeugteilen angebracht werden, die ggf. durch Teile des Fahrwerks in der Höhenlage unterschiedlich und durch die Fahrbewegungen und Schwenkbewegungen in der Horizontale verschiebbar sind, so kann es insbesondere beim Abstellen des anzukuppelnden Fahrzeugteiles auf unebenem Gelände zu einer um die Mittelachse verdrehten Positionierung kommen, die auch von den Zentrierzapfen und den Zentrieraufnahmeöffnungen nicht ohne weiteres ausgeglichen werden kann. Für solche Einsatzfälle sieht eine

0127146

vorteilhafte Ausgestaltung der Erfindung vor, daß die Kupplungselemente, welche am Energieversorgungsteil des Fahrzeuges angeordnet sind, um eine Achse drehbar und ausrichtbar angeordnet sind. Sie können dann, wenn gewünscht entweder von Hand oder auch von den Zentrierzapfen und Zentrieröffnungen in die richtige Winkellage zueinander gebracht werden. Für solche Fahrzeuge und Fahrzeugteile, bei denen vollständige Fernbedienungskupplung vorgesehen ist, sieht man zweckmäßig Ferneinstellmittel für die Winkeleinstellung vor. Die Drehlagerung für das Ausrichten der Kupplungselemente kann zugleich als Drehlagerung für die Verbindung der beiden, auch im Betrieb gegeneinander zu verdrehenden Fahrzeugteile genutzt werden. Sie ist dann jedoch wesentlich stabiler auszubilden, als wenn es sich nur um eine Verdrehlagerung zum Zwecke der Ausrichtung handelt und die Kräfte nach dem Verdrehen von fest eingreifenden Haltemitteln übertragen werden. Solche Verdrehungen können insbesondere bei Untertagefahrzeugen, die in besonders beengten Verhältnissen eingesetzt werden sollen, deshalb notwendig sein, weil dabei auf gefederte Anbringung der Achsen am Rahmen verzichtet werden muß, um die für eine Federung an sich notwendige Höhe anders ausnutzen zu können. Dann ist beim Fahren im Vierradbetrieb, bei dem die vier Räder an über eine Kupplung verbundenen Teilen auf zwei Achsen angeordnet sind, eine Verdrehung dieser Achsen gegeneinander deshalb zuzulassen, damit nicht in unebenem Gelände ein Rad abhebt. Im Bereich einer ohnehin vorzusehenden Kupplung zwischen den Fahrzeugteilen kann sie bei geeigneter Lage auf der Längsmittelebene des Fahrzeuges die erwünschten Drehbewegungen gut ermöglichen. Ein solches Drehlager wird zweckmäßig als die Kupplungsteile umgebendes Dreh-Wälzlager gestaltet. Es kann als Rillenlager mit entsprechend dimensionierten Kugeln und Rillen für Axial- und Radialkräfte ausgestaltet sein und ggf. ein Vier-Punkt-Lager, also ein Lager, bei dem die Wälzkörper an vier Stellen tragen. Dadurch, daß es die ganzen zu kuppelnden Elemente umgibt, ergibt sich eine ausreichend große Stützbasis für die Übertragung der beträchtlichen, die beiden Fahrzeugteile verbindenden, in verschiedenen Richtungen wirkenden Kräfte; andererseits können alle innerhalb des Drehlagers liegenden Teile gegeneinander für die verschiedenen Einsatzzwecke problemlos verdreht werden.

Außer der Drehlagerung der gesamten Teile zum Zwecke der Winkelausrichtung und vorzugsweise Verdrehung der Fahrzeugteile gegeneinander sind geeignete konstruktive Maßnahmen zum Einstecken und Herausziehen des einen Steckverbinderteiles vorgesehen. Dazu sieht eine weitere vorteilhafte Ausgestaltung der Erfindung vor, daß die Steckverbinderteile wenigstens der einen Kupplungsseite in einem außen zylindrischen Tragkörper angeordnet sind, der in einer Bohrung des Kupplungsgrundkörpers nicht verdrehbar, jedoch axial verschiebbar gelagert ist. Eine solche Lagerung könnte naturgemäß auch mit einem rechteckigen, mehreckigen oder unrunden Schiebekörper oder auf getrennten Gleit- oder Rollführungen vorgesehen sein. Da jedoch ohnehin eine Drehlagerung für die meisten Einsatzfälle erforderlich erscheint und damit um eine Mittelachse runde oder zylindrische Teile ohnehin an der Kupplung vorhanden sind, ist es zweckmäßig auch den Axial-Verschiebungsteil nunmehr zylindrisch zu gestalten und in einer zylindrischen Führung zu bewegen, weil diese herstellungstechnisch einfach realisiert werden kann und in der Benutzung zweckmäßig ist sowie bei den an Fahrzeugen dieser Art im beengten Raumverhältnissen auftretenden Bedürfnissen besonders gut gerecht wird.

Dieser Tragkörper ist durch geeignete Ferneinstellmittel zu bewegen. Das kann bei geeigneter Auslegung durch elektromagnetische, elektromechanische, pneumatische oder

**0127146**

hydraulische Längsstellmittel erfolgen. Man kann den
Tragkörper selbst als Hydraulik-Kolben-Zylinder-Aggregat
ausbilden und mit entsprechenden Anschlüssen versehen.
Eine besonders vorteilhafte, auch die Drehbewegung
zulassende und den notwendigen Hub gut gewährleistende
konstruktiv einfache Gestaltung sieht vor, daß der die
Steckverbinderteile tragende, verschiebbare Tragkörper
am Energieversorgungsteil des Fahrzeuges vorgesehen und
mittels wenigstens eines vorzugsweise zentral angreifenden
Hydraulikzylinders um den Schiebeweg der Kupplungselemente
verschiebbar angeordnet ist. Wollte man seitliche Hydraulikzylinder vorsehen und die Verdrehung zulassen, so müßten sie
mit entsprechenden Gelenken ausgestattet werden, während
der Zentralzylinder die Drehung des Kolbens problemlos
zuläßt. Der Verschiebezylinder wird zweckmäßig an einem
Kupplungsträger abgestützt. Dem um einen gewissen Winkelbereich von ca. ± 10 bis 15° verdrehbaren Drehlager werden
zweckmäßig Drehbegrenzungsanschläge zugeordnet. Solche
Verdrehungen von etwa 20 bis 30° reichen aus, um die bei
Unebenheiten auftretenden Drehbewegungen während der
Fahrt oder beim Einkuppeln an anderen als den zuletzt
abgestellten Arbeits- und Beförderungsteilen erforderlichen
Winkeldrehungen zu ermöglichen und ein zu weites Verdrehen zu verhindern.

Den Kupplungsgrundkörpern sind jedoch nicht nur Zentriermittel und Drehmittel zuzuordnen, sondern auch mechanische
Halteeinrichtungen. Wenn auch durch die zweckmäßige Gestaltung der ineinander schiebenden Hülsen keine die Steckverbinder auseinanderdrückenden hydraulischen Kräfte auftreten,
so ist doch im Betrieb für einen guten mechanischen Zusammenhalt zu sorgen. Dieser wird bei einfachen Steckverbindern
in der Regel durch innen liegende gefederte und durch Schieber
gestützte Kugeln oder ähnliche seitliche Eingriffselemente
gewährleistet. Solche mechanischen Halteeinrichtungen reichen für die im praktischen Betrieb der hier behandelten Kupplungen auftretenden Kräfte bei weitem nicht aus. Es sind also sicher haltende, die großen auftretenden Kräfte in allen Betriebslagen abstützende und entfernbare Hintergreifeinrichtungen vorzusehen, wie sie in anderen Ausgestaltungen auch bereits in der genannten DE-OS 24 22 809 in verschiedener Weise behandelt sind. Sie können nach den jeweiligen sonstigen Bedürfnissen gestaltet sein.

Für eine kleinräumig aufgebaute Kupplung, die jedoch hohen Betriebskräften ausgesetzt ist, sieht eine Ausbildung nach der Erfindung, die auch mit anderen hydraulischen Steckverbindern und ohne Drehlager für solche Fahrzeuge eingesetzt werden kann, vor, daß an den beiden Kupplungsgrundkörpern die mechanischen Zentrier- und Halteeinrichtungen fernbetätigbarer Halteelemente angeordnet sind, die nach dem Eingreifen der Zentriermittel die mechanische Verbindung der beiden Kupplungsgrundkörper herstellen. Als Bestandteile solcher mechanischer Zentrier- und Halteeinrichtungen werden nach einer besonders bevorzugten, leicht herstellbaren, gut betätigbaren und die großen Kräfte gut abstützenden Gestaltung der Erfindung an jedem Kupplungsgrundkörper auswärts ragende Schenkel vorgesehen, die von wegbewegbaren klauenförmigen Übergreifeinrichtungen im gekuppelten Zustand zusammengehalten werden. Es wird bei dieser vorteilhaften Ausgestaltung nicht der Weg von Durchsteckstiften gewählt, der an sich auch möglich und vorteilhaft ist, sondern das Übergreifen mit klauenförmigen Übergreifeinrichtungen. Dabei ist es zweckmäßig , die auswärts ragenden Schenkel als keilförmige Schienen auszubilden, die von U-förmigen Halteschienen übergriffen werden. Diese benötigen nur kleine Hubwege und können durch die Keilform, die jedoch selbsthemmend zu gestalten ist, die endgültige Positionierung in axialer Richtung vornehmen. Sie werden zweckmäßig horizontal angeordnet und die U-förmigen Halteschienen weisen im Bereich ihrer

Enden Betätigungseinrichtungen auf. Die Betätigungseinrichtungen auf jeder Seite können vorteilhaft mit zwischen den U-förmigen Halteschienen eingehängten je zwei Zugfederspeichern und je einem gegen die Federspeicher arbeitenden Hydraulikzylinder gebildet sein. Diese Ausbildung hat den Vorteil, daß auch bei Ausfall der Hydraulik die Kupplung nicht öffnen kann, sondern von den zu Sicherheitszwecken doppelt ausgeführten Zugfederspeichern zusammengehalten wird. Da die Schienen mit Selbsthemmung gebaut sind, können sie selbst bei Aufall eines Federspeichers nicht öffnen. Auch wird für die Haltekraft nicht Betriebsdruck und damit Energie benötigt. Die Keilschienen werden zweckmäßig mit austauschbaren Keilleisten ausgestattet, da diese Elemente zu den Verschleißteilen der Kupplung gehören. Gleichartige Keilleisten sind auch an den U-förmigen Halteschienen vorgesehen. Die Kupplungsteile sind für die vielfältigen Bewegungen geeignet drehbar, schiebbar und gelenkig zu gestalten. Für den praktischen Einsatz einer solchen Kupplung an einer mit austauschbaren Arbeits- und Beförderungsteilen und einem Antriebsfahrzeug gestalteten Fahrzeugkombination mit Knicklenkung kann vorteilhaft der Kupplungsträger Bestandteil des Knickgelenks mit Vertikalachse sein. Er ist dann unmittelbar im Gelenkbereich angeordnet, kann gut montiert und konstruktiv günstig gestaltet werden.

0127146

Für die Antriebe der Räder gibt es verschiedene, in der Fahrzeugtechnik übliche Antriebsmöglichkeiten. Für den vielfältigen Einsatz im Untertagebetrieb und zur Anpassung an die verschiedenen Gegebenheiten sieht man zweckmäßig vor, daß die Räder von Antriebsfahrzeug und ggf. Arbeits- und Beförderungsteil mit hydraulischen Einzelantrieben ausgestattet sind. Dabei ist es nicht notwendig, daß alle Antriebs- und Beförderungsteile mit entsprechend angetriebenen Rädern ausgestattet sind, zumal bei solchen die nur wenig Vortriebskräfte benötigen, kann darauf verzichtet werden, z. B. bei Hebe- und Lade- oder Wartungseinrichtungen. Die lenkbaren Räder des Arbeits- und Beförderungsteiles können mit Schemellenkungen oder dgl. gestaltet sein, je nach dem Verwendungszweck des Antriebs- und Beförderungsteiles. Besonders vorteilhaft ist jedoch die Verwendung lenkbarer Achsschenkel, weil dann der Raum zwischen den Rädern genutzt werden und die Räder nach den jeweiligen Bedürfnissen individuell besser gelenkt werden können.

Insbesondere für lange Fahrzeuge, die große Strecken im engen Untertagebetriebe fahren müssen, ist es zweckmäßig, daß am Ende des Arbeits- und Beförderungsteiles ein weiterer Führerstand mit Steuer- und Lenkmitteln vorgesehen ist. Da es viele Strecken gibt, in denen keine Wendemöglichkeit besteht, ist insbesondere für den sicheren Personentransport bei der Rückfahrt ein zweiter Führerstand auf dem Personenbeförderungsteil von besonderem Nutzen. Auch bei großen Ladefahrzeugen, die vom Hauptführerstand nicht mehr gut eingesehen werden können, ist ein zweiter Führerstand auf dem Arbeitsteil zweckmäßig.

Das Personenbeförderungsteil kann wegen der günstigen Gesamtauslegung der Anordnung der Kupplung und der großen Länge infolge der Grundrißgestaltung und Lenkung für eine große Zahl von Personen, beispielsweise 26, ausgelegt sein. Die Zahl der zu befördernden Personen kann vergrößert werden, wenn ein als Personenbeförderungsteil ausgebildetes Arbeits- und Beförderungsteil mit wechselweise in unterschiedlicher Höhe angeordneten Sitzbänken ausgestattet ist. Dann können die Beine der jeweils Tiefersitzenden unter den Sitzbänken der Nachbarsitze z.T. sogar mit den Knien untergebracht werden, so daß ohne Beeinträchtigung der Beinfreiheit ein günstiges Sitzen einer Vielzahl von Personen möglich ist.

Als Arbeits- und Beförderungsteil kann ein Fahrzeugteil vorgesehen sein, auf welchem im Bereich der Räder ein schwenkbarer Kran und im Bereich zwischen Rädern und Kupplung ein Aufnahmeraum mit Ladepritsche und/oder Aufnahmemitteln für Wechselcontainer vorgesehen ist. So kann mit einem Fahrzeug eine selbstladende Einheit geschaffen werden, bei der vorzugsweise von der Seite geladen wird. Der Bereich der Räder am Arbeitsteil läßt ohnehin keine Nutzung der vollen Breite und vollen Höhe zu, weshalb es zweckmäßig ist, dort den Kran unterzubringen.

Das Arbeits- und Beförderungsteil kann als Serviceeinheit mit Behältern, Betankungseinrichtungen und Werkzeugaufnahmen für Treib- und Versorgungsstoffe ausgestattet sein. Eine solche Serviceeinheit wird nicht so oft benutzt und braucht nunmehr nur die Kupplung, Stützfüße und Räder aufzuweisen, während alles andere am Antriebsteil vorhanden ist. Ein Arbeits- und Beförderungsteil kann mit Kippmulden ausgestattet sein. Je nach den Bedürfnissen können weitere Ausgestaltungen des Arbeits- und Beförderungsteiles vorgesehen werden. Zweckmäßig weisen diese zusätzliche hydraulisch ausfahrbare Stützfüße auf, die insbesondere beim Schwenken größerer Lasten ausgefahren werden. Weitere Einzelheiten, Ausgestaltungen, Vorteile und Merkmale der Erfindung sind auch in dem nachfolgenden in Verbindung mit den Zeichnungen gegebenen Beschreibungsteil behandelt.

Ausführungsbeispiele der Erfindung werden nachfolgend anhand der Zeichnungen näher erläutert und beschrieben.

Es zeigen:

Fig. 1    Die schematisierte Seitenansicht eines Untertagefahrzeuges;

Fig. 2    die schematisierte Draufsicht auf das Untertagefahrzeug nach Fig. 1;

Fig. 3    die schematisierte Draufsicht eines Fahrzeuges
nach den Fig. 1 und 2 bei Kurvenfahrt in einer
sehr engen Kurve;

Fig. 4    die Seitenansicht eines Arbeits- und Beförderungsteiles mit Ladekran und Wechselcontainerraum;

Fig. 5    die Draufsicht auf das Arbeits- und Beförderungsteil nach Fig. 4;

Fig. 6    die Seitenansicht eines Arbeits- und Beförderungsteiles mit Kippmulde;

Fig. 7    die Rückansicht des Arbeits- und Beförderungsteiles nach Fig. 6, wobei Lenkrad und Fahrersitz weggelassen sind;

Fig. 8    die Schrägansicht auf die geöffnete Kupplung,
wobei die Kupplungsteile nicht parallel auseinandergenommen, sondern zur besseren Verdeutlichung
in Schrägstellung von Antriebsfahrzeug und
Arbeits- und Beförderungsteil dargestellt sind;

Fig. 9    die Schrägansicht auf die Rückseite des beweglichen Knickgelenkteils mit der Rückseite der
Kupplung, den Federspeichern und den Betätigungszylindern;

0127146

Fig. 10    einen Vertikalschnitt durch die Kupplungsmitte
in der Fahrzeuglängsachse, wobei jedoch die
Steckverbinder, die über die Fläche verteilt
liegen, in eine Ebene derart gedreht sind, daß
drei unterschiedlich große hydraulische Steckverbinder dargestellt sind;

Fig. 11    die Ansicht auf die dem Antriebsfahrzeug zugewendete Seite des Antriebs-Kupplungsteiles, wobei
die Tragplatte abgenommen ist, so daß man nur
das Kugellager, den Kupplungsgrundkörper, den
Tragkörper, die Anschluß- und Halteplatten
mit ihren Anschlußbohrungen und einige weitere
Teile sieht, während sonstige Teile der Übersichtlichkeit halber weggelassen sind;

Fig. 12    einen der Fig. 10 entsprechenden Längsschnitt
durch einen Steckverbinder in größerem Maßstab
und in der Anlagestellung der beiden Kupplungshälften, jedoch noch verschlossen;

Fig. 13    eine der Fig. 12 entsprechenden Darstellung, bei
der der Tragkörper vorgeschoben und dadurch die
hydraulische Verbindung hergestellt ist.

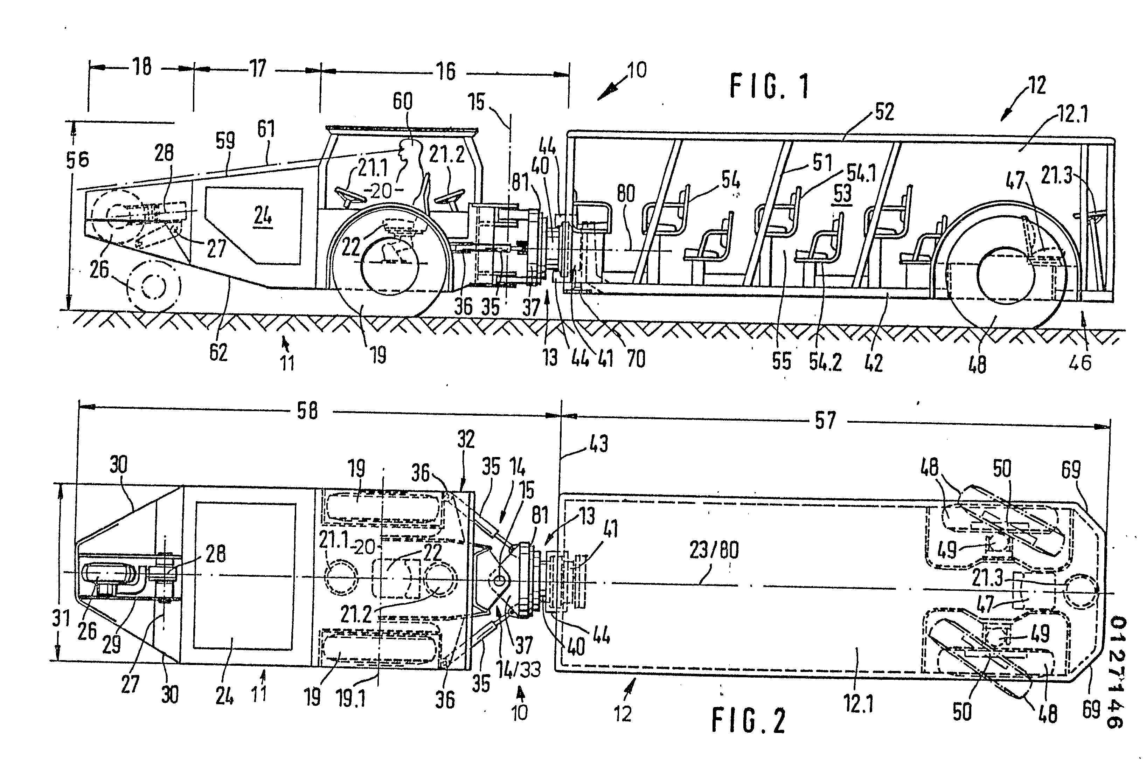

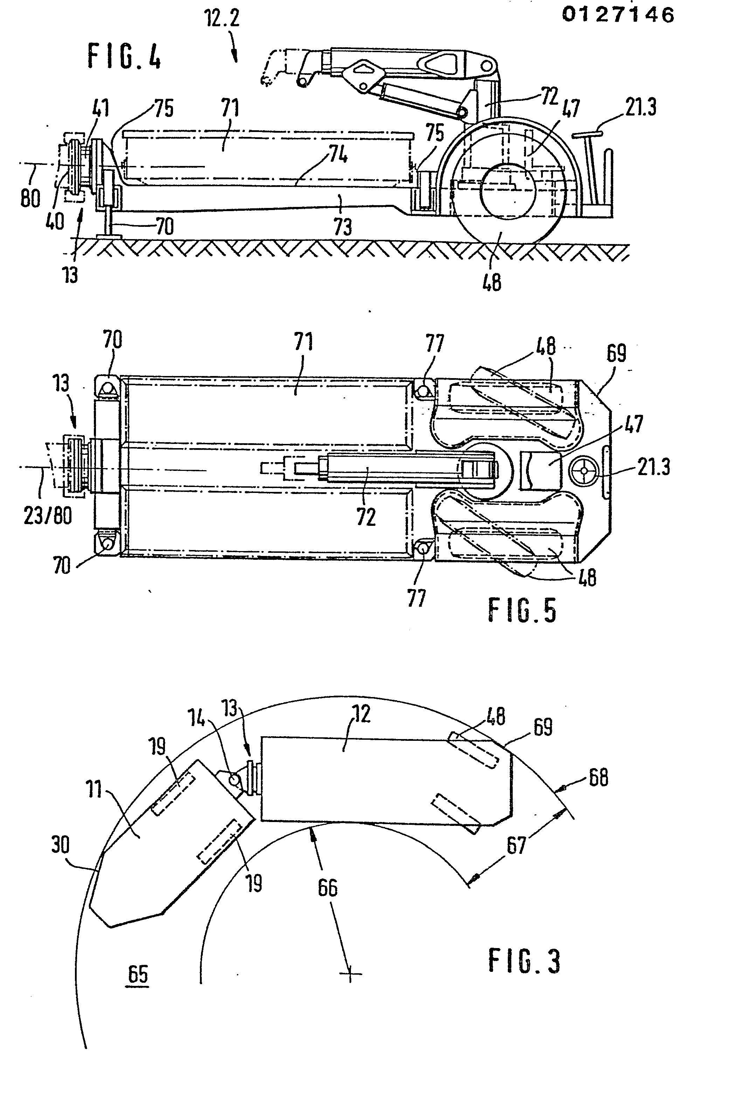

Das Untertagefahrzeug 10 für gleislosen Betrieb besteht
aus einem Antriebsfahrzeug 11 und Arbeits- und Beförderungsteilen 12, die wahlweise verwendet werden können. In
Fig. 1 ist ein Personenbeförderungteil 12.1 dargestellt.
Die beiden Teile des Untertagefahrzeuges sind mit Hilfe
einer Kupplung 13 in der weiter hinten erläuterten Weise verbunden. Das
Antriebsfahrzeug besitzt eine Knicklenkung 14 mit einer senkrechten
Gelenkachse 15. Das Antriebsfahrzeug 11 ist in Längsrichtung betrachtet in drei Abschnitte 16, 17 und 18
unterteilt. Der Abschnitt 16 enthält die auf einer
starren Achse angeordneten Antriebsräder 19 auf jeder
Seite. Zwischen ihnen ist der Führerstand 20 vorgesehen.
Dieser hat zwei Lenkräder 21 und einen Wendesitz 22.
Sie sind in der Längsmitte 23 angeordnet. Durch Drehen des Sitzes kann der Fahrer, wie bekannt, in beiden Fahrtrichtungen mit einem entsprechend gestalteten Lenkrad
problemlos sein Fahrzeug führen. Die Bedienelemente sind
entsprechend angeordnet. Im mittleren Abschnitt 17 ist
die Energieversorgung mit einem schlagwettergeschützten
Antriebsaggregat 24 vorgesehen. Hier sind ein schlagwettergeschützter Dieselmotor, Treibstofftank, vom Motor
angetriebene Hydraulikpumpen und sonstige Steueraggregate
untergebracht, die nur durch den Kasten 24 veranschaulicht
werden. Es kann auch ein Elektromotor vorgesehen sein,
der von Fahrleitungen oder Aufwickelkabeln gespeist
wird. In der Regel wird man jedoch den dieselhydraulischen
Antrieb wählen. Ggf. kann auch ein Druckluftantrieb vorgesehen sein.

Im vordersten Abschnitt 18    ist ein schwenkbares Spornrad 26
vorgesehen, welches um eine Achse 27 in die beiden dargestellten Positionen geschwenkt werden kann und zusammen
mit den Rädern 19 das Fahren des Antriebsfahrzeuges allein gestattet. Das Spornrad ist um eine Spornradlenkachse 28
lenkbar. Es ist in einer Spornradeinheit 29 auf der Mittelachse 23 untergebracht, so daß der Fahrzeuggrundriß
trapezförmig - wie aus Fig. 2 ersichtlich - gestaltet
werden kann, indem nämlich seine vorderen Eckbegrenzungen 30    von der Fahrzeugbreite 31 ausgehend schräg
verlaufen, so daß die Eckbereiche abgeschnitten sind,
was der Kurvenfahrt zugute kommt. Das Spornrad 26 wird
in nicht näher dargestellter Weise hydraulisch von dem
Führerstand 20 aus ausgeschwenkt und mit Hilfe der Lenkräder 21 gelenkt.

Für die Knicklenkung 14 in dem der Antriebsachse 19.1 benachbarten
Endbereich 32 des Antriebsfahrzeuges 11 ist das Knickgelenk 33
mit der vertikalen Knickgelenkachse 15 vorgesehen, welche auf
der Mittelachse 23 liegt. Die Knickgelenkachse 15 liegt so
nahe, wie es der notwendige Lenkeinschlag gestattet, an
den Antriebsrädern 19. Der bewegliche Knickgelenkteil 36

0127146

ist in üblicher Weise mit zwei im Abstand von der Knickgelenkachse 15 an ihm angreifenden Lenkzylindern 35 versehen. Diese sind im Bereich der Räder mittels . Lenkzylinderlagern 36 am Grundrahmen des Antriebsfahrzeuges 11
in nicht näher dargestellter, üblicher Weise angelenkt.
Der bewegliche Knickgelenkteil 37 trägt den antriebsfahrzeugfesten Antriebs-Kupplungsteil 40 der Kupplung 13.
Zur Kupplung 13 gehört weiter ein mit dem Rahmen 42 des
Beförderungsteiles 12 fest verbundener Beförderungs-
Kupplungsteil 41. Die Kupplungsteile können in der
Kupplungsebene 43 voneinander getrennt werden und sind
mit wegbewegbaren klauenförmigen Übergreifeinrichtungen
in Form von U-förmigen Halteschienen 44 zusammengehalten.
Diese sind am Antriebs-Kupplungsteil 40 gelagert und
mit Hilfe von Hydraulikzylindern und Federspeichern
haltbar und betätigbar. In der Kupplung 13 ist in den Fig.1 bis 7
nicht näher dargestellter Weise eine Vielzahl von
Hydraulikleitungen und eine Anzahl von elektrischen
Leitungen mit Hilfe von fernbetätigbaren Steckverbindungen zusammengefaßt. Diese dienen zur Übertragung der Hydraulikströme für den Antrieb der
Räder und für die verschiedenen Lenk- und Steuerbewegungen
sowie für die Beleuchtung des Fahrzeuges und dgl. Für
den Kuppelvorgang sind außer der mechanischen Kupplung
mit den Halteschienen 44 Schiebe- und Dreheinrichtungen
für das Kuppeln, Ausrichten der Kupplungsteile und für das
gegenseitige Verdrehen von Antriebsfahrzeug 11 und Arbeits-
und Beförderungsteil 12 vorhanden.

Im Bereich des Endes 46 des Beförderungsteiles 12 ist
ein weiterer Führerstand mit Fahrersitz 47 und mit einem dritten Lenkrad 21.
vorgesehen. Er dient zur Rückwärtsfahrt. Das Beförderungsteil 12.1 hat an seinem Rahmen 42 im Bereich des Endes 46
auf Achsschenkeln schwenkbare, lenkbare und antreibbare Räder 48,
deren Schwenkachsen mit 49 angedeutet sind. Die Geradeausposition und die am stärksten eingeschlagene Position
sind in Fig. 2 veranschaulicht. Der Einzelradantrieb
mit Hilfe von Hydromotoren ist im einzelnen nicht näher
veranschaulicht. Die dem Antrieb und der Bremsung
dienenden Hydromotoren 50 sind schematisch angedeutet.

./27

Streben 51 halten ein Schutzdach 52. Im Innenraum 53 des hier als Personenbeförderungsteil 12.1 gestalteten Arbeits- und Beförderungsteiles sind Sitzbänke 54 vorgesehen. Diese können nach den jeweiligen räumlichen Verhältnissen gestaltet sein. Bei der hier gewählten Darstellung sind die Bänke 54.1 und 54.2 in unterschiedlicher Höhe angeordnet und sehr dicht aneinander gerückt, so daß die auf den Bänken 54.2 sitzenden Personen ihre Beine mit guter Beinfreiheit im Bereich des Knieraums 55 unter den Sitzen der Bänke 54.1 unterbringen können. Es kann jedoch auch eine übliche Sitzanordnung auf gleicher Höhe gewählt werden.

Das gesamte Fahrzeug hat eine relativ geringe Breite 31 von etwa zwei Metern und vor allem eine für ein solches Schwertransport- und Schwerarbeitsfahrzeug geringe Höhe 56 von etwa 2,10 m, also etwas mehr als der Größe eines aufrechtstehenden Menschen. Die Länge 57 des Personenbeförderungsteiles 12.1 beträgt ca. 6 m. Die Länge 58 des Antriebsfahrzeuges beträgt beispielsweise ca. 5,40 m. Ferner ist beim Antriebsfahrzeug 11 die obere Begrenzungslinie 59 vom mittleren Antriebsaggregatraum und Aufnahmeraum für das Spornrad 26 in den Bereichen 17 und 18 stark abfallend gestaltet, obwohl hier relativ große Aggregate aufgenommen werden müssen, und zwar ist sie so gewählt, daß von der normalen Kopfhaltung des Fahrers 60 ausgehend die Sichtlinie 61 bei etwa 12 bis 15 m den Boden erreicht. Auch die untere Kante 62 des vorderen Bereiches des Antriebsfahrzeuges ist abgeschrägt, so daß bei eingezogenem Spornrad auch auf unebeneren Strecken gefahren werden kann, soweit es die Bauchfreiheit des Gesamtfahrzeuges zuläßt.

Die Räder 19 und 48 sind mit großvolumigen Luftreifen versehen und bieten dadurch relativ gute Federungseigenschaften. Da die Gesamthöhe 56 des Fahrzeuges wegen der beengten Verhältnisse im Untertagebergbau gering gehalten werden soll, verzichtet das Fahrzeug in dieser Ausführungsform auf getrennte Federn zwischen den Rädern 19 bzw. 48

**0127146**

und den Rahmen 42, 73 des Antriebsfahrzeuges und des Arbeits- und Beförderungsteiles, damit der Hubweg für die Federungen wegfällt und für die Ausnutzung der Gesamthöhe zur Verfügung steht. Da das Fahrzeug insgesamt jedoch sehr lang ist, muß dafür Rechnung getragen werden, daß bei unebenem Boden nicht auf drei Rädern gefahren und damit eine erhebliche Torsionskraft auf den Knickgelenk- und Kupplungsbereich übertragen wird. Zu diesem Zweck sind beide Teile gegeneinander um eine horizontale, in der Längsmitte 23 liegende Drehgelenkachse 80 drehbar. Dazu ist der Antriebs-Kupplungsteil 40 gegenüber dem beweglichen Knickgelenkteil 37 drehbar gelagert. Dazu wird zweckmäßig ein auf dem die inneren Kupplungsteile umgebenden Radius Wälzkörper aufweisendes Radial- und Axialkräfte übertragendes Wälz-Drehlager 81 gewählt, welches im einzelnen in den Fig. 1 bis 8 nicht dargestellt ist. Es kann ein sogenanntes Vierpunktlager sein, dessen Wälzkörper auf vier Punkten tragen und welches für solche Belastungsfälle besonders geeignet ist.

Die dadurch gegebene Drehbarkeit wird zweckmäßig durch zugeordnete Anschläge begrenzt, damit die Kupplungsteile nach dem Trennen nicht in eine zu weit von der Eingriffseinstellung abweichende Stellung verschwenken können. Zweckmäßig sieht man ggf. auch eine Fernverstellung für die Drehbewegung vor. Diese ist jedoch für den Fahrbetrieb abzuschalten, damit freie Drehbarkeit gegeben ist. Das Drehgelenk könnte auch an anderer Stelle, beispielsweise getrennt im Bereich der Lagerung des Knickgelenkes vorgesehen sein. In der vorgesehenen Anordnung bietet es jedoch den Vorteil, daß man dem Knickgelenk eine stabile Platte zuordnen kann, auf der dann alle Gelenk- und Kupplungsteile angeordnet sind. Ein zentraler Hubzylinder für die Betätigung der Kupplungselemente läßt auch die notwendige Drehbewegung zu.

0127146

Die Lenkzylinder 35 der Knicklenkung 14 und die Lenkzylinder der Achsschenkellenkung der Räder 48 werden zweckmäßig mit geeigneten Verriegelungen versehen, damit sie nur in der gewünschten Weise entweder getrennt oder gemeinsam betätigt werden können, während bei normaler Geradeausfahrt nur eine der Lenkungen in Tätigkeit treten kann.

Stützfüße 70 sind im vorderen Endbereich der Arbeits- und Beförderungsteile 12 zum Abstellen derselben vorgesehen und werden vorzugsweise hydraulisch fernbetätigt.

Zwischen den Stellmitteln für die Kupplung und den Stellmitteln für die Stützfüße 70 sind zweckmäßig ebenfalls Verriegelungseinrichtungen vorgesehen, damit man nicht entkuppeln kann, wenn die Stützfüße nicht ausgefahren sind, und nicht fahren kann, bevor nicht ordnungsgemäß eingekuppelt ist und die Stützfüße eingezogen sind. Diese Verriegelungen sind zweckmäßig mit bekannten hydraulischen und/oder elektrischen Einrichtungen sowie ggf. pneumatischen Einrichtungen zu realisieren.

Der Motor des Antriebsaggregates 24 wird zweckmäßig mit einer pneumatisch aus dem Zentralnetz zu betreibenden Anlaßeinrichtung versehen. Da eines der zusammen arbeitenden Antriebsfahrzeuge normalerweise über Tage betrieben wird, kann dieses mit einfacheren, nicht schlagwettergeschützten Motoren und Einrichtungen ausgestattet sein. Die Gesamtlänge der Arbeits- und Beförderungsteile ist so gewählt, daß sie gerade in den Korb eines Senkrechtförderers passen. Sie werden dann über Tage eingeschoben und unter Tage mit einem entsprechenden Antriebsfahrzeug gekuppelt und an die gewünschte Stelle vorort gefahren. So ist ein Umladen oder Umsteigen nicht mehr erforderlich und sowohl die Antriebsfahrzeuge als auch die Arbeits- und Beförderungsteile können nach den jeweiligen Gegebenheiten optimal genutzt werden.

Die Knicklenkung 14 und die Lenkung der Räder 48 können unabhängig voneinander und jede einzeln oder auch beide gemeinsam betätigt werden. Dadurch ergeben sich viele Fahr-, Lenk-, Wende- und Manipuliermöglichkeiten. Die Fig. 3 veranschaulicht, wie das Antriebsfahrzeug 11 in

der äußersten Knickstellung und das Arbeits- und Beförderungsteil 12 mit äußerstem Lenkeinschlag der Räder 48 in einem Stollen 65 in sehr enger Kurvenfahrt mit einem Wenderadius 66 von 3,60 m gut um die Kurve kommt, wobei die Stollenbreite 67 3,00 m beträgt und trotzdem an der Außenwand 68 keine Behinderungen auftreten, weil die vordere Eckbegrenzung 30 und auch die hintere abgeschrägte Eckbegrenzung 69 des Grundrisses so getroffen sind, daß nur das unbedingt über die Räder hinaus notwendige Grundrißmaß des Rahmens vorhanden ist. Durch das Zusammenwirken von Knicklenkung und Achsschenkellenkung wird ein für ein so langes Fahrzeug bisher im Untertagebereich nicht mögliche Kurvengängigkeit erzielt.

Fahr- und Arbeitsweise:

Mit dem beschriebenen, in den Fig. 1 bis 3 dargestellten Fahrzeug wird, wie folgt, gefahren und gearbeitet. In der in Fig. 1 dargestellten Anordnung ist das Fahrzeug für Geradeausfahrt im Personentransport eingerichtet. Der Fahrer 60 kann am Lenkrad 21.1 lenken, die Knicklenkung 14 durch Betätigung der Lenkzylinder 35.1 und 35.2 in üblicher, bekannter Weise benutzen und stellt dabei in der Regel die Hinterräder 48 des angekuppelten Personenbeförderungsteiles 12.1 auf Geradeausfahrt. Bei dieser Fahrt ist das Spornrad 26 eingezogen. Wenn die Knicklenkung von etwa 45° nach jeder Seite nicht ausreicht, um in engen Kurven zu fahren, so kann der Fahrer die Achsschenkellenkung der Hinterräder 48 zuschalten und über geeignete Steuer- und Kopplungsmittel wird dann sowohl mit der Knicklenkung als auch mit der Achsschenkellenkung der Hinterräder 48 gelenkt, wie es Fig. 3 in der Draufsicht veranschaulicht. Dabei kann in einem Stollen von etwa drei Meter Breite mit einem Innenradius von etwa 3,60 m und folglich einem Außenradius von etwa 6,60 m mit einem Fahrzeug von etwa 2 m Breite und etwa 11,40 m Länge problemlos gefahren werden, was nur durch den gemeinsamen Einsatz von an günstiger Stelle vorgesehener Knicklenkung und im Endbereich vorgesehener Achsschenkellenkung möglich ist. Das Fahrzeug ist - wie ersichtlich - nur auf zwei Achsen bzw. vier Rädern oder ggf. Radpaaren abgestützt und hat dadurch die günstigen Fahreigenschaften eines Zwei-Achs-Fahrzeuges. In der Regel wird der Fahrer vom Hauptfahrersitz 22 aus die Personenfahrt bewältigen. Mit dem Fahrzeug können beispielsweise 26 Personen befördert werden. Erreicht das Fahrzeug das Ende einer Strecke, in der nicht gewendet werden kann, so kann der Fahrer zur Rückfahrt auf den Fahrersitz 47 umsteigen und mit Hilfe des Lenkrades 21.3 die Rückwärtsfahrt problemlos bewerkstelligen. Dabei hat er alle für die Bedienung erforderlichen Bedienelemente auch am Ende des Personenbeförderungsteils 12.1 griffgünstig angeordnet. Bei Fahrt rückwärts wird er in der Regel die Achsschenkellenkung der Räder 48 für den normalen Lenkvorgang benutzen, weil er von der Knicklenkung weit entfernt ist, und so das Fahrzeug wie ein normales Personentransportfahrzeug mit nicht gelenkten Hinterrädern fahren. Kommt er jedoch in enge Kurven, wie sie in Fig. 3 dargestellt sind, so kann er bedarfsweise die Knicklenkung zuschalten. Durch die zwei getrennten und kombinierbaren Lenkmöglichkeiten sowie die Anordnung von drei Lenkrädern hat das Fahrzeug eine bisher nicht gekannte Manövrierfähigkeit bei einfachem Aufbau des Personenbeförderungsteiles. Ermöglicht wird diese Lenkung von drei Stellen aus durch die günstige Gestaltung der Kupplung 13.

Wenn zu Beginn der Schicht der Personentransport abgeschlossen ist, fährt der Fahrer das Personenbeförderungsteil 12.1 an einen geeigneten Abstellplatz. Er fährt dort die Stützfüße 70 des Personenbeförderungsteiles 12.1 mit einer geeigneten hydraulischen Steuerung aus, so daß das Personenbeförderungsteil 12.1 allein steht.

Durch geeignete Betätigung der Steuermittel werden das Spornrad 26 ausgeschwenkt und im Innern der Kupplung die hydraulischen und elektrischen Kupplungsstecker des Antriebs-Kupplungsteiles 40 aus dem Beförderungs-Kupplungsteil 41, in den Antriebs-Kupplungsteil 40 der Kupplung 13 abgezogen, was bei geeigneter Gestaltung der hydraulischen Steckverbinder lecköfrei erfolgen kann. Dann wird durch Betätigung geeignet angeordneter Hydraulikzylinder die mechanische Verriegelung der Kupplung gelöst, in dem die Halteschienen 44 aus ihrer Kupplungsstellung in die Entkupplungsstellung bewegt werden. Das Antriebsfahrzeug 11 kann nunmehr auf seinen Hauptantriebsrädern 19 und dem Spornrad 26 fahren. Da die Kupplung 13 gelöst ist, kann das Fahrzeug unter Stehenlassen des Personenbeförderungsteiles 12.1 nunmehr ohne jede manuelle Kupplungstätigkeit wegfahren. Es fährt dann zum jetzt unmittelbar nach Abschluß des Personentransportes zu benutzenden Arbeits- und Beförderungsteil 12. Da dieses zuvor am Ende der letzten Schicht oder letzten Arbeit geeignet abgestellt wurde, kann das mechanische Ankuppeln durch geeignetes Anfahren der Kupplungsposition mit Hilfe der Lenkung des Spornrades und Einfahren von entsprechenden Positionierungsstiften und Schließen der Halteschienen 44 schnell mechanisch mit dem Antriebsfahrzeug 11 verbunden werden. Durch entsprechende Betätigung wird dann das gemeinsame oder zumindest fernbetätigte Einstecken der hydraulischen und/oder elektrischen Steckverbinder bewirkt. Dann werden die Stützfüße 70 des Arbeitsteiles und das Spornrad 26 fernbetätigt angehoben und innerhalb kürzester Frist ist ein fahrfertiges Arbeitsfahrzeug ohne unnütze Fahrstrecken an der Einsatzstelle betriebsbereit. Ein einzelner Fahrer kann so in einer bisher nicht bekannten Weise die Fahrleistung des teuersten Teiles des Fahrzeuges, nämlich des Antriebsfahrzeuges 11 voll ausnutzen.

Das vom Führerstand aus kuppelbare Fahrzeug, welches einen allein fahrenden Teil aufweist und seinen Arbeits- und Beförderungsteil schnell abstellen kann, ist für den Untertagebetrieb auch deshalb von großem Vorteil, weil die zu befördernden Personen und Güter über Tage weit entfernt vom Schacht aufgenommen werden und mit einem Antriebsfahrzeug bis in den Korb des Förderschachtes geschoben, dann schnell und ferngesteuert getrennt werden können, während das Antriebsfahrzeug über Tage bleibt. Unter Tage angekommen, nimmt dann ein anderes Antriebsfahrzeug den Weitertransport bis zur Arbeitsstelle vorort oder zum Verwendungspunkt auf. Entsprechendes gilt für das Befördern des aufgeladenen Materials, wie Kohle, Erze, Mineralien oder Werkzeuge, Geräte und Betriebsstoffe. Ein Umladen und Umsteigen ist nicht notwendig; weiteres Personal für das Kuppeln und Entkuppeln ebenfalls nicht. Das Fahrzeug kann als Zugfahrzeug und als Schubfahrzeug in beiden Richtungen gefahren werden.

Einige Beispiele für Arbeitsfahrzeuge sind in den Fig. 4 bis 7 dargestellt. Dabei ist jeweils das Antriebsfahrzeug weggelassen. Gleiche Teile sind mit gleichen Bezugszeichen versehen.

Die Fig. 4 und 5 zeigen ein Arbeitsteil 12.2 mit einem Container 71 und einem Ladekran 72. Der Rahmen 73 trägt mit Achsschenkellenkungen die Räder 48 und einen weiteren Sitz 47 sowie ein drittes Lenkrad 21.3 wie bei dem Personenbeförderungsteil 12.1. Das Arbeits- und Beförderungsteil 12.2 mit Kran 72 und Ladepritsche 74 bzw. Aufnahme 75 für Wechselcontainer stützt sich im vorderen Bereich auf den Stützfüßen 70 ab und hat das dem zuvor beschriebenen gleiche Beförderungs-Kupplungsteil 41 zum Anschluß der Kupplung 13. Der Container 71 ist im Raum zwischen den Rädern 78 bzw. der Kransäule 72.1 und der Kupplung 13 vorgesehen. Hier wird mit seitlichem Laden und Schwenken gearbeitet, wie es von anderen ähnlichen Fahrzeugen bekannt ist. Es sind Zusatzstützfüße 77 für den Kran 72 vorgesehen.

./34

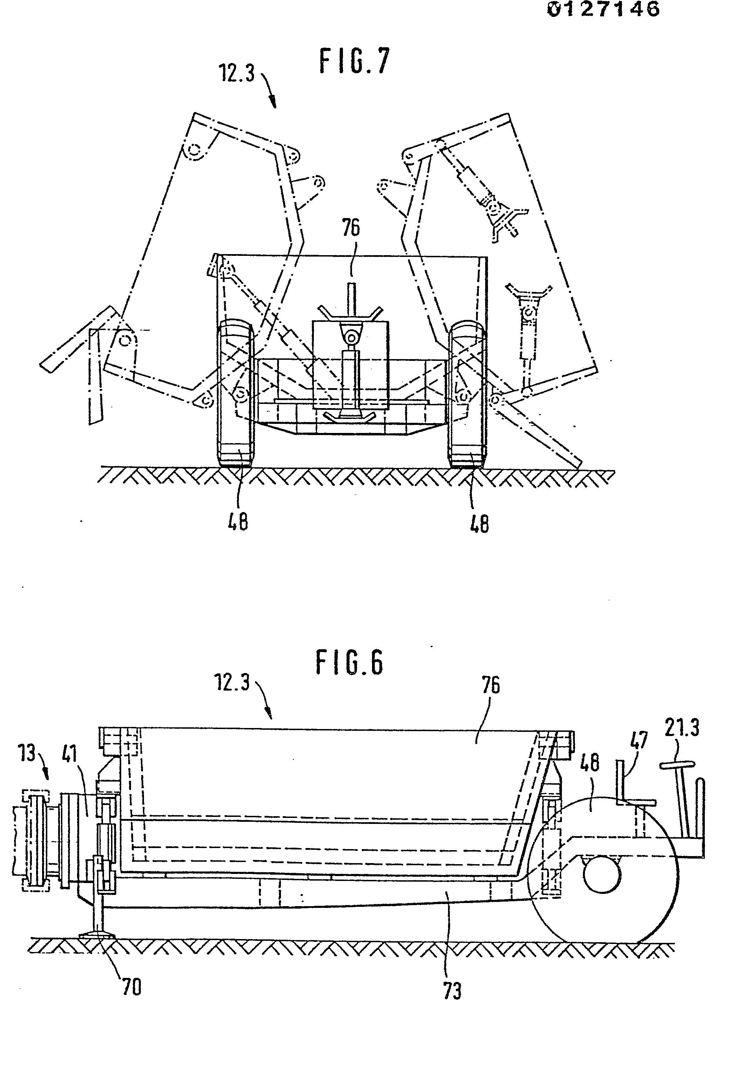

Die Fig. 6 und 7 zeigen ein Arbeits- und Beförderungsteil 12.3 mit einer Kippmulde 76, die wie Fig. 7
strichpunktiert andeutet, nach beiden Seiten gekippt
werden kann. Auch dieses hat ausfahrbare Stützfüße 70
und Räder 48und einen weiteren Fahrersitz 47 und
ein weiteres Lenkrad 21.3. Die Kupplungsanschlußelemente sind gleich zu gestalten.

Weitere Arbeitsteile, wie ein Serviceteil mit Aufnahme
von Benzintanks, Öltanks, Fettbehältern, Werkzeugen
oder dgl. und einem kleinen Kran können ähnlich ausgestaltet sein. Da ein solches Teil nur seltener benutzt
wird, ist es günstig, daß es nicht als einzelfahrfertiges
Fahrzeug ausgebildet ist, sondern als fernbetätig ankuppelbares Arbeits- und Beförderungsteil 12. Auch
kann man eine Vibrationswalze, Gabelhubeinrichtungen,
Bohreinrichtungen und dgl. auf entsprechenden ankuppelbaren Rahmen mit je einer Achse bzw. zwei Rädern und
entsprechenden ein- und ausfahrbaren Stützeinrichtungen
unterbringen.

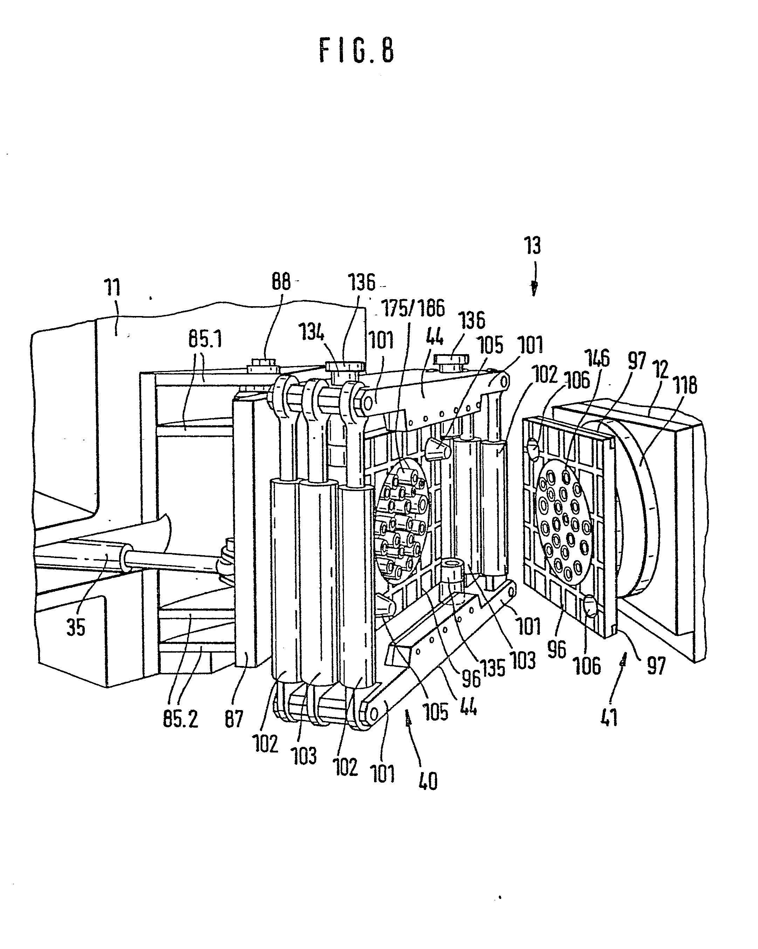

In den Fig. 8 bis 13 sind Einzelheiten eines besonders
vorteilhaften Ausführungsbeispieles der Kupplung 13,
wie sie aus den Fig. 1 bis 6 wegen der Kleinheit der
Darstellung nur grob hervorgeht, dargestellt.

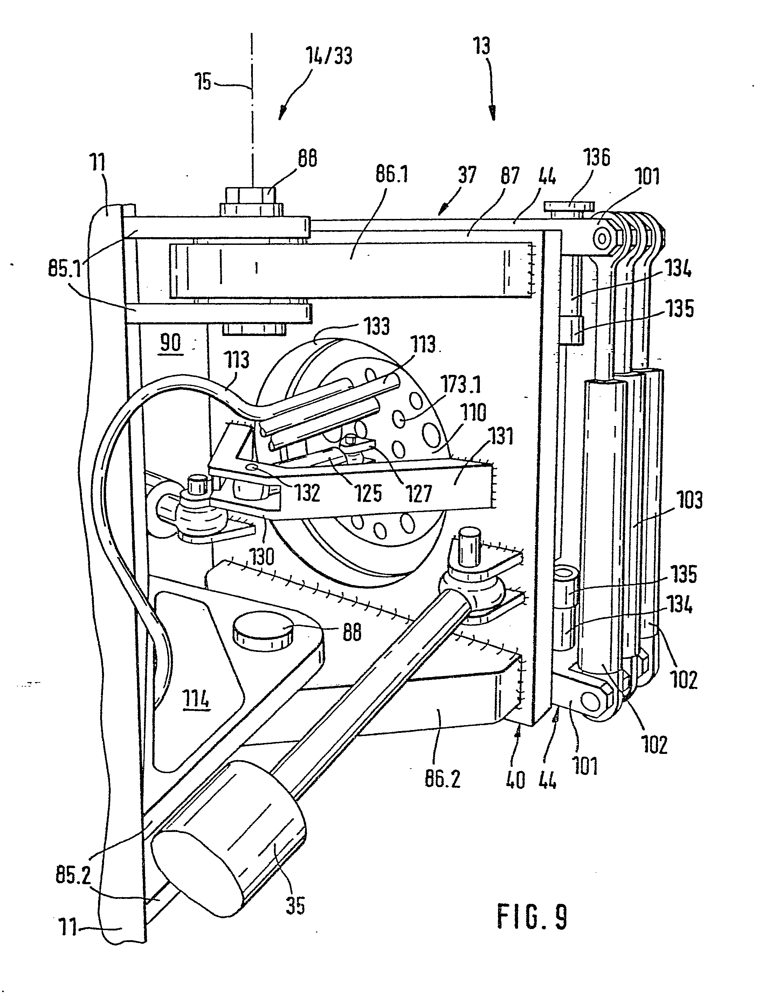

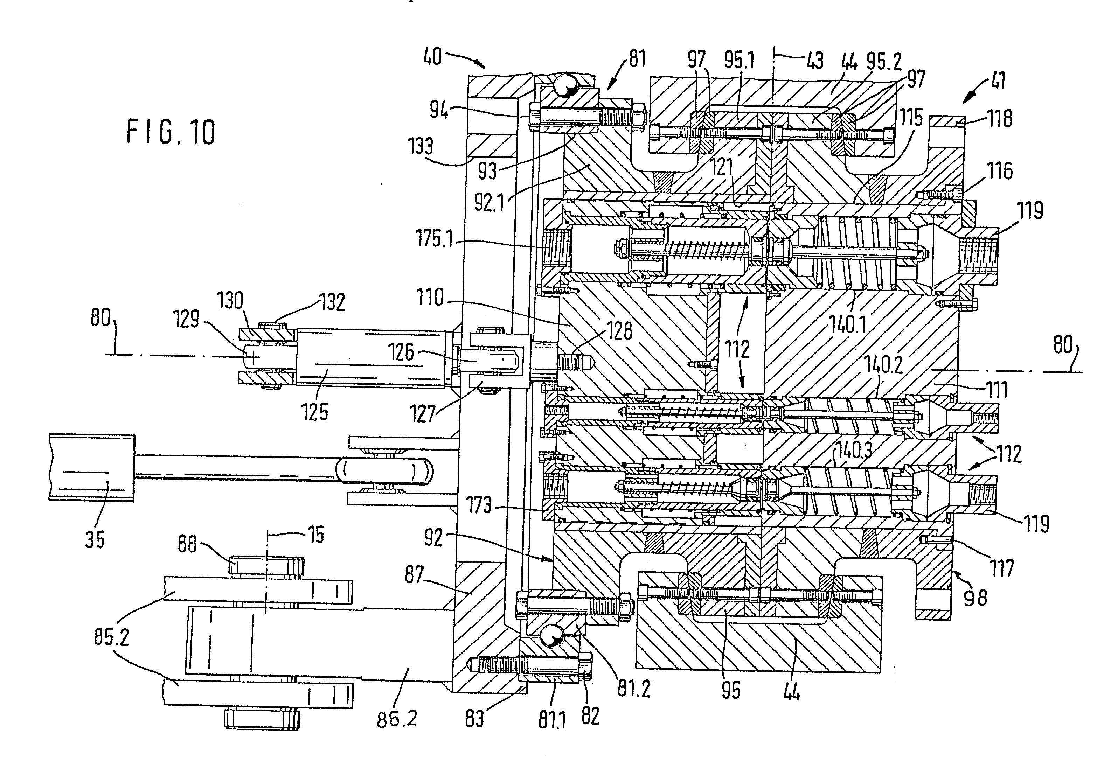

Die zwei Teile des Knickgelenkes 14 sind durch die Gelenkachse 15 verbunden. Das Knickgelenk 14 hat am Antriebsfahrzeug 11, an dem nicht dargestellten Rahmen, Stützarme 85, die jeweils oben und unten als Stützarmgabeln 85.1 und 85.2 ausgebildet sind. Zwischen sie greifen jeweils die etwa dreieckförmigen Gelenkarme 86.1 und 86.2, die an der Tragplatte 87 jeweils oben und unten angeschweißt sind, wie es die Fig. 9 und 10 zeigen. Knickgelenkbolzen 88 verbinden die Stützarme 85 und die Gelenkarme 86. Zwischen den Stützarmen und Gelenkarmen ist ein Gelenkraum 90 gebildet, in dem verschiedene unten behandelte Einrichtungen untergebracht sind. Die Gelenkarme 86 und die Tragplatte 87 sind Bestandteil des beweglichen Knickgelenkteiles 37. Die Tragplatte 87 trägt über das als Kugellager 81 ausgebildete Wälz-Dreh-Lager den Antriebs-Kupplungsteil 40, der mit Hilfe der U-förmigen Halteschienen 44 mit dem Beförderungs-Kupplungs-teil 41 verbunden werden kann, wie es bereits vorstehend erläutert wurde und in weiteren Einzelheiten im folgenden erläutert werden wird.

Der Außenring 81.1 des Kugellagers 81 ist mit Schrauben 82 in einen Zentrierkragen 83 eingesetzt und flanschartig an der Tragplatte 87 festgeschraubt. Der Innenring 81.2 des Kugellagers 81 trägt seinerseits den Kupplungsgrund-körper 92 des Antriebs-Kupplungsteiles 40. Der Kupplungs-grundkörper 92 ist mit Hilfe einer Zentrierung 93 in den Innenring 81.2 eingesteckt und darin flanschartig mit Schrauben 94 festgeschraubt. Diese Teile sind ringförmig und rund gestaltet, während die Tragplatte 87 etwa quadratisch ist. Die Drehgelenkachse 80 des Kugellagers 81 liegt horizontal und auf der Fahrzeuglängsmitte 23 etwas unterhalb der Höhenmitte. Um diese Drehgelenkachse 80 sind Antriebsfahrzeug 11 und Arbeits- und Beförderungsteile 12 gegeneinander verdrehbar. Dafür ist das sehr
stabil auszubildende Kugellager 81 als Vier-Punkt-Lager
gestaltet. Das heißt, die Rillen in den Außen- und Innenringen 81.1 und 81.2 des Kugellagers 81 sind so geformt,
daß vier Punkte jeder Kugel tragen können und somit nicht
nur Axial- und Radialkräfte, sondern auch gut unsymmetrisch
eingeleitete Kräfte, die aus Biegekräften und dgl. resultieren, einwandfrei auch während der Drehung übertragen
werden können. Das ist erforderlich, weil das Drehgelenk
mit dem Kugellager 81 während der Fahrt infolge von Bodenunebenheiten auftretende Drehbewegungen durchführen muß
und trotzdem alle vom einen Fahrzeugteil auf den anderen
zu übertragenden Kräfte allein abzustützen und zu übertragen hat.

Der Kupplungsgrundkörper 92 hat an dem flanschartigen
Kugellageranschlußteil 92.1 eine runde Gestaltung. An
diesen schließt sich über die Schweißnaht 92.2 der
mechanische Stützteil 92.3 an. Dieser hat einen
zylindrischen Ansatz, jedoch im übrigen etwa rechteckige
Gestaltung mit den auswärts ragenden Schenkeln 95.1, die
- wie Fig. 10 veranschaulicht - etwas keilförmig gestaltet
sind und mit ihrer zur Drehgelenkachse 80 senkrecht liegenden
Anlagefläche 96 bis zur Kupplungsebene 43 reichen. Die
Schenkel 95 erstrecken sich über die gesamte Breite der
Kupplung und tragen austauschbare Keilleisten 97, die
Bestandteile der auswärts ragenden, als keilförmige
Schienen ausgebildeten Schenkel 95 sind. Der Beförderungs-
Kupplungsteil 41 hat einen gleichartig gestalteten
Kupplungsgrundkörper 98 mit ebenfalls als keilförmige
Schienen ausgebildeten auswärts ragenden Schenkeln 95.2
mit austauschbaren Keilleisten  97.   Die U-förmigen
Halteschienen 44 haben entsprechende gleichartig ausgebildete austauschbare Keilleisten  97, die jedoch umgekehrt montiert sind und an der Innenseiten der Schenkel
der U-förmigen Halteschienen 44 angeordnet sind, so daß sich die sich gut aufeinander legenden Keilflächen ergeben.

Für die Betätigung und das Zusammenhalten der Halteschienen 44 sind - wie aus den Fig. 8 und 9 ersichtlich - an den Einhängeenden 101 auf jeder Seite zwei Zug-Federspeicher 102 angeordnet, die die Halteschienen 44 in Richtung auf die Kupplungsteile vorspannen. Dazwischen liegt auf jeder Seite ein hydraulischer Betätigungszylinder 103, dessen Enden auf den gleichen Bolzen 104 mit den U-förmigen Halteschienen 44 verbunden sind. Durch Einführen von Drucköl in die Betätigungszylinder 103 werden die U-förmigen Halteschienen 44 um etwas mehr als die Höhe der austauschbaren Keilschienen 97 auseinander bewegt, so daß die beiden Kupplungsteile 40 und 41 voneinander getrennt werden können.

Für das zentrierte Zusammenführen und Zusammenhalten der beiden Kupplungsteile sind an dem Kupplungsgrundkörper 92 des Antriebs-Kupplungsteiles 40 aus der Kupplungsebene 43 herausstehende Zentrierzapfen 105 zur Mitte diagonal gegenüber liegend angeordnet, wie es Fig. 8 zeigt. Ihnen sind in dem Kupplungsgrundkörper 98 des Beförderungs-Kupplungsteiles 41 passend angeordnete Zentrieraufnahmeöffnungen 106 zugeordnet. Wie ersichtlich, sind die Zentrierzapfen 105 keglig oder zumindest mit kegligen und gerundeten Köpfen versehen, so daß sie in die Zentrieraufnahmeöffnungen 106 beim Ausrichten des Antriebsfahrzeuges 11 gegenüber dem Arbeits- und Beförderungsteil 12 eindringen können und die beiden Kupplungsteile in die richtige Position zueinanderbringen, so daß durch Entlasten der Betätigungszylinder 103 die Federspeicher 102 die U-förmigen Halteschienen 44 über die genau positionierten auswärts ragenden Schenkel 95 bewegen und den mechanischen Kupplungsvorgang abschließen können. Die Keilwinkel sind selbsthemmend gewählt.

Die Halteschienen 44 sind auf je zwei Halteschienen-
Führungsbolzen 134 geführt, die an dem Kupplungsgrundkörper 92
an seitlich abstehenden Bolzenhaltern 135 nach oben und
unten abstehend angebracht sind und welche außerhalb der
Halteschienen 44 Anschlagbunde 136 aufweisen, die es
sicherstellen, daß beim Auseinanderdrücken der Betätigungszylinder 103 auch beide Halteschienen 44 bis nach außen
bewegt werden.

In den Kupplungsgrundkörpern sind mit Hilfe von Tragkörpern 110 und 111 eine Vielzahl von Steckverbindern 112
untergebracht. Dabei sind nur Steckverbinder für Hydraulikleitungen 113 dargestellt, obwohl auch Steckverbindungen
für elektrische Leitungen mit entsprechenden bekannten Stift-
Kupplungs-Elementen    hergestellt werden können und
wobei diese entsprechend in den Tragkörpern 110 und 111
mit gleicher Schieberichtung angeordnet werden und entsprechend anzuschließen sind.

Für das trennbare Fahrzeug mit hydraulischem Antrieb und
hydraulischer Steuerung sind jedoch die Verbindungen der
hydraulischen Leitungen von besonderer Bedeutung und
deshalb hier im einzelnen näher dargestellt.

Der Tragkörper 111 des Beförderungs-Kupplungsteiles 41
ist als zylindrisches Montageteil ausgebildet und in eine
Aufnahmebohrung 115 eingesteckt und in dieser mit Hilfe
der Schrauben 116 und der Stifte 117 unverdrehbar befestigt. Der Flansch 118 des Kupplungs-Grundkörpers 98
ist mit dem Rahmen des jeweiligen Arbeits- und Beförderungsteiles 12 in geeigneter Weise fest verbunden. In die
Anschlußstutzen 119 der Steckverbinder 112 werden die
zu den Verbrauchern oder Steuerelementen führenden Leitungen
beispielsweise eingeschraubt oder sonstwie angeschlossen,
wie es die angedeuteten Gewinde veranschaulichen. Leitungen
und Schläuche sind hier jedoch der Übersichtlichkeit halber weggelassen. In der Darstellung der Fig. 10 sind
drei Steckverbinder 112,und zwar oben einer     für größte
Querschnitte, unten einer für mittlere Querschnitte und
in der Mitte einer für kleinere Querschnitte dargestellt.
Die Fig. 8, 9 und 11 veranschaulichen jedoch, wie eine
wesentliche größere Zahl von Steckverbindern auf der
kreisrunden Fläche geeignet verteilt und zueinander
passend angeordnet sind, wie es für Mehrfach-Kupplungen
dieser Art für ganz andere Zwecke jedoch ähnlich bekannt
sein dürfte. Hier ist jedoch die Besonderheit in der
Ausgestaltung und Betätigung sowie Zuordnung der
Steckverbinder zueinander und den übrigen Teilen
der Kupplung und des Fahrzeuges zu sehen. Dazu
weist der mit dem die Energieversorgung aufweisenden
Antriebsfahrzeug 11     über     das  Knickgelenk 33
verbundene Antriebs-Kupplungsteil 40   den   axial verschiebbaren Tragkörper 110 in dem Kupplungsgrundkörper 92
auf. Er steckt in einer Lagerbohrung 121, deren Durchmesser größer als die gesamte Montagefläche der Steckverbinder ist und in der er axial verschiebbar, jedoch
unverdrehbar angeordnet ist. Die Axialverschiebung ist
für die Kupplungsbewegung erforderlich.

Für die Axialverschiebung des Tragkörpers 110 in der
Lagerbohrung 121 ist ein mit seiner Achse in der Drehachse 80 liegender hydraulischer Verschiebezylinder 125 vorgesehen,
dessen Kolbenstange über ein Auge 126 mit einem Gabelverbindungselement 127 verbunden ist, welches in eine
zentrale Gewindebohrung 128 des Tragkörpers 110 in der
Achse 80 eingeschraubt ist. Der Verschiebezylinder 125
ist am anderen Ende mit einem Befestigungsauge 129
zwischen die Gabelarme 130 eines V-förmigen Trägers 131
gesteckt und darin mit Hilfe eines Bolzens 132 befestigt.
Der V-förmige Träger 131 ist - wie insbesondere aus
Fig. 9 ersichtlich - beiderseits der Tragplattenbohrung 133
angeschweißt. Die zentrale Lage ist deshalb gewählt,
weil die Abstützung mit Hilfe des V-förmigen Trägers 131

.../40

0127146

an der Tragplatte 87 erfolgt, während der Angriff des Kolbens an dem Tragkörpers 110 erfolgt. Der Tragkörper 110 ist jedoch über das Kugellager 81 gegenüber der Tragplatte 87 drehbar. Ein zentral angeordneter hydraulischer Verschiebezylinder kann solchen Drehbewegungen problemlos folgen und trotzdem in jeder Stellung dem Tragkörper 110 die erforderliche Kupplungsbewegung erteilen. Für die Begrenzung der Drehbewegung des Kupplungsgrundkörpers 92 gegenüber der Tragplatte 87 sind zweckmäßig geeignete Drehbegrenzungsanschläge vorgesehen, die hier der Übersichtlichkeit halber weggelassen sind, und von in den entsprechenden Bewegungsbahnen liegenden an den zueinander beweglichen Teilen befestigten Anschlagnocken oder Anschlagvorsprüngen gebildet sein können. Die mögliche Drehbewegung nach jeder Seite sollte mindestens 10°, vorzugsweise etwa 15°, betragen. Durch die Begrenzung der Drehbewegung wird auch verhindert, daß bei entkuppeltem Zustand durch ungleiche Belastung des an sich schweren Antriebs-Kupplungsteils 40 dieses sich zu weit verdreht und dann für den Kuppelvorgang nur noch schwer in seine geeignete Lage gebracht werden kann und/oder die Schläuche der Hydraulikleitungen 113 mechanisch überlastet werden.

Die einzelnen Steckverbinder 112 für die Hydraulikleitungen sind alle gleichartig aufgebaut, haben jedoch unterschiedliche Strömungsquerschnitte und damit auch sonstige Abmessungen. Sie sind jedoch alle gleich lang und für gleichen Hub des Tragkörpers 110 ausgelegt. Auch die entsprechenden elektrischen Steckverbindungen sind so auszulegen und anzuordnen, daß sie bei dem Hub des Tragkörpers 110 ineinandergreifen bzw. gelöst werden.

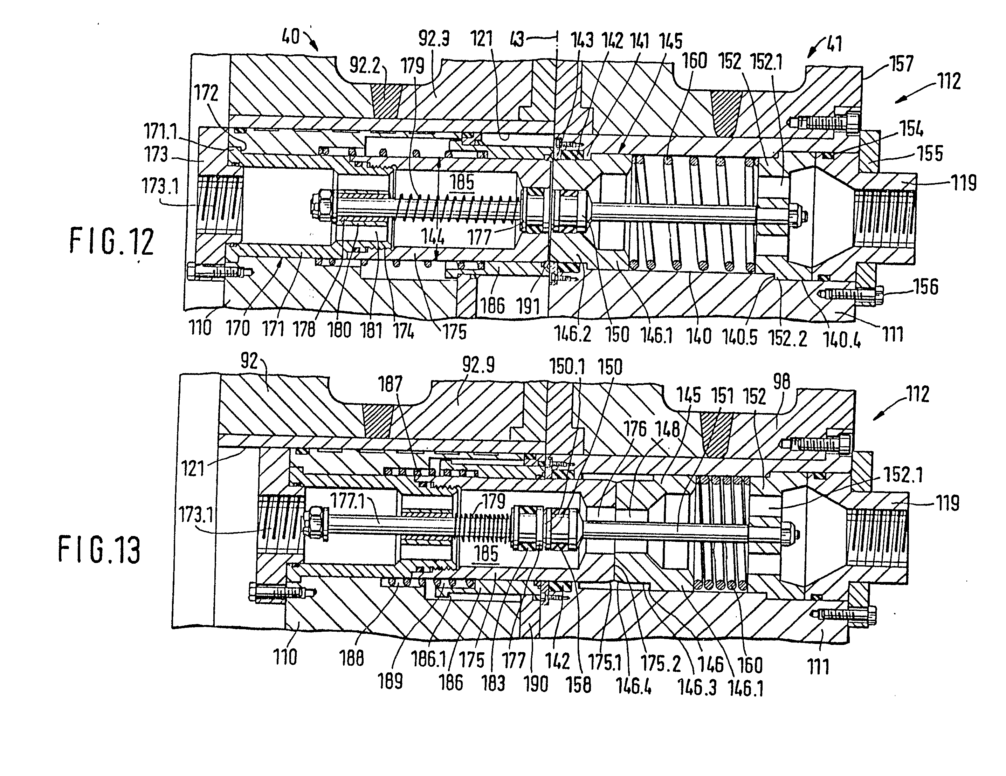

Die Steckverbinder sind in Fig. 10 in der verschlossenen Stellung dargestellt. Die gleiche Stellung nehmen sie in Fig. 12 ein. Sie werden anhand der Fig. 12 und 13 in Einzelheiten näher erläutert. In dem mit dem Kupplungsgrundkörper 98 des Beförderungs-Kupplungsteiles 41 fest verbundenen Tragkörper 111 sind drei Steckverbinderbohrungen 140.1, 140.2 und 140.3 gebohrt. Sie haben
vordere Anschlagabsätze 141 und gut Hochdruck abdichtende Schiebedichtungen 142, die mit Halteringe 143 gehalten sind.

Anschlagabsatz 141, Schiebedichtung 142 und Haltering 143
haben als Innendurchmesser den Dichtungsdurchmesser 144.
In den Steckverbinderbohrungen 140 sind verschiebbar
Schiebehülsen 145 angeordnet, die jeweils eine Anschlagschulter 146 haben. Sie haben einen Führungsschaft 146.1, der in
die Steckverbinderbohrung 140 gleitend paßt und dadurch
sauber geführt ist. Der Dichtungsansatz 146.2 hat eine
äußere zylindrische Dichtungsfläche 146.3 und eine
Einführschräge 146.4. Er paßt vom Durchmesser und der
Länge genau in den vorderen Teil der Steckverbinderbohrung 140 vom Anschlag 141 bis zur Kupplungsebene 43.
Die Schiebehülse 145 hat eine Zentralöffnung 148, die
relativ großvolumig etwa mehr als ein Drittel des Durchmessers
der Steckverbinderbohrung 140 ausmacht. In ihr steckt
in der verschlossenen Stellung ein feststehender Zentraldichtkolben 150, der auf einer Stützstange 151 abgestützt
ist, die in einem Halteeinsatz 152 festgeschraubt ist.
Der Halteeinsatz 152 hat Öldurchtrittsbohrungen 152.1
und eine Anschlagschulter 152.2, mittels deren er sich
an einer Stützschulter 140.5 der Steckverbinderbohrung 140
abstützt. Der Anschlußstutzen 119 ist mit einem in das
im Durchmesser größere Bohrungsende 140.4 unter Einschaltung einer
Dichtung 154 eingesteckt und durch eine Haltescheibe 155
mittels Schrauben 156 festgeschraubt. So können alle erwähnten Teile von der Rückseite 157 her eingeführt werden.
In den Zentraldichtkolben ist eine Schiebedichtung 158
in eine Dichtungsnut eingelegt. Sie dient der absolut
tropffreien Abdichtung des auch im geöffneten Zustand
gefüllten Leitungssystems. Der Zentraldichtkolben 150
endet mit seiner vorderen flachen Anschlagfläche 150.1
in der Kupplungsebene 43. Die Schiebehülse 145 stützt
sich auf einer starken Druckfeder 160 ab, die zwischen
ihrem hinteren Ende und dem Halteeinsatz 152
eingespannt ist und, wie aus den Fig. 12 und 13 ersichtlich,
zusammengedrückt werden kann, bis fast alle Windungen sich
berühren.

Die zugeordneten Elemente des Steckverbinders 112 in dem Antriebs-Kupplungsteil 40 sind ähnlich aufgebaut. Hierbei ist in dem Tragkörper 110 eine mehrfach gestufte Bohrung 170 vorgesehen. In den kleinsten Durchmesser ist eine Kupplungshülsenhaltehülse 171 eingesteckt, die einen Kragen 171.1 hat, der sich an einer Schulter 172 des Tragkörpers 110 abstützt und die mit einer Anschluß-und Halteplatte 173 in dem Tragkörpers 110 gehalten ist. Eine Anschlußbohrung 173.1 dient zum Einschrauben der beweglichen Hydraulikleitungen, wie es weiter unten erläutert werden wird. Die Kupplungshülsenhaltehülse 171 trägt eine mittels Gewinde 174 aufgeschraubte, feststehende Kupplungshülse 175 mit gleichem Außendurchmesser.

Sie kann im zusammengeschraubten Zustand montiert und demontiert werden. Im Außendurchmesser entspricht die feststehende Kupplungshülse 175 genau dem Außendurchmesser des Dichtungsansatzes 146.2 und dem Innendurchmesser der Schiebedichtung 142, der als Dichtungsdurchmesser 144 bezeichnet ist.Dadurch kann sie abgedichtet eingeschoben werden. Sie hat eine Einführschräge 175.1 und eine ebene Anlagefläche 175.2.
Sie hat eine Zentralöffnung 176, die im Durchmesser vorzugsweise geringfügig größer ist als die Zentralöffnung148 der Schiebehülse 145, damit der Zentraldichtkolben 150 ungehindert auch bei geringen Toleranzen eintreten und durchdringen kann. Eine Schiebedichtung 183 ist in eine Nut des verschiebbaren Zentraldichtkolbens 177 eingesetzt. Der Zentraldichtkolben 177 hat einen Führungsschaft 177.1, der in einer Gleithülse 178 verschiebbar ist, wobei zwischen dem Kolben und der Gleithülse 178 eine starke Druckfeder 179 eingespannt ist. Die Gleithülse 178 ist in einem zentralen Halteelement 180 der Kupplungshülsenhaltehülse 171 angeordnet. Dieses Halteelement 180 seinerseits ist über Durchbrechungen 181 mit entsprechenden Stegen abgestützt, so daß ein großvolumiger Durchtrittsquerschnitt entsteht. Wie ersichtlich, ist auch der Innenraum 185 der feststehenden Kupplungshülse 175 so großvolumig wie möglich bemessen, um in der Kupplungsstellung gutenDurchtritt der oft verwendeten großen Ölmengen zu ermöglichen.

Auf der Außenfläche der feststehenden Kupplungshülse 175 ist eine verschiebbare Schutzhülse 186 vorgesehen, die gegen eine die feststehende Kupplungshülse 175 und teilweise die Kupplungshülsenhaltehülse 171 umgebende Druckfeder 187 verschiebbar abgestützt ist, wobei Federaufnahmeräume 188 und 189 gebildet sind, so daß die Feder in der zurückgeschobenen Stellung der Fig. 13 gut aufgenommen wird. Die Schutzhülse 186 hat einen Anschlagkragen 186.1, mittels dessen sie gegen Hinausschieben in der Abdeckplatte 190 gehalten wird. Die Schützhülse 186 hat vorn einen Schmutzabstreifer 191, der der Reinigung der Oberfläche der feststehenden Kupplungshülse 175 dient. Die Schutzhülse 186 schützt die feststehende Kupplungshülse 175 auch gegen Beschädigung und Verkratzen in dem rauhen Bergwerksbetrieb.

Die Hydraulikleitungen, welche an den Anschlußbohrungen 173.1 angeschlossen werden, sind der Übersichtlichkeit halber nicht alle dargestellt. Fig. 9 zeigt drei mit verbiegbaren Hochdruckschläuchen gebildete Hydraulikleitungen 113, von denen nur eine voll durchgezeichnet ist. Sie führt von der zugehörigen Anschlußbohrung 173.1 in einem vorzugsweise etwas nach oben geschlungenem Bogen über den V-förmigen Träger 131 hinweg, durch die Durchführbohrung 114 im Stützarm 85 zu dem entsprechenden Ventil des Antriebsaggregats 24, welches nur in den Fig. 1 und 2 schematisch dargestellt ist. Entsprechend sind alle anderen Leitungen geführt und auf den Gelenkraum 90 derart verteilt, daß sie sowohl der Schiebebewegung des Tragkörpers 110 als auch der Gelenkbewegung der Knicklenkung 14 folgen können.

Arbeits- und Funktionsweise der Kupplung:

Über das im Zuaammenhang mit dem Fahrzeug 10 Beschriebene hinaus arbeitet die in den Fig. 8 bis 13 in Einzelheiten beschriebene Kupplung vor allem wie folgt. Wenn das Antriebsfahrzeug 11 an ein Arbeits- und Beförderungsteil 12 heranfährt und die beiden Kupplungsteile sich etwa wie in Fig. 8 einander annähern muß der Fahrer die beiden Kupplungsteile durch Fahrbewegungen und Schwenkbewegungen der Knicklenkung sowie ggf. Drehungen des Antriebs-Kupplungsteils 40 in eine solche relative Lage zueinanderbringen, daß die Zentrierzapfen 105 in die Zentrieraufnahmeöffnungen 106 beim Zusammenfahren eintreten. In diesem Zustand sind die Betätigungszylinder 103 auseinandergefahren, so daß die Halteschienen 44 ganz nach unten und nach oben bis an die Anschlagbunde 136 verschoben sind und die Keilschienen zwischen ihnen hindurchgelangen können. Wenn die Anlageflächen 96 in der Kupplungsebene 43 aufeinanderliegen, werden die Betätigungszylinder 103 von der anderen Seite beaufschlagt öder auch nur entlastet, so daß die Halteschienen 44 unter der Wirkung der Federspeicher 102 und ggf. der hydraulischen Kraft in den Kolbenstangenräumen zusammengefahren werden und sich die Keilschienen aufeinander legen, wie es in Fig. 10 dargestellt ist, so daß die Kupplung mechanisch geschlossen ist. Dieser Zustand ist in den Fig. 10 und 12 dargestellt. Die hydraulischen Leitungen sind noch unterbrochen. Die Kupplungshülse 175 liegt an der Schiebehülse 145 des Beförderungskupplungsteils 41 an. Gleiches gilt für die Schutzhülse 186, welche auf dem Haltering 143 liegt. Die beiden Zentraldichtkolben 150 und 177 liegen ebenfalls aneinander an. Durch Beaufschlagen des Verschiebezylinders 125 wird der verschiebbare Tragkörper 110 in Richtung auf den Tragkörper 111 des Beförderungs-Kupplungsteiles nunmehr verschoben. Dabei tritt die feststehende Kupplungshülse 175 durch den Haltering 143 und die Schiebedichtung 142 in die

**0127146**

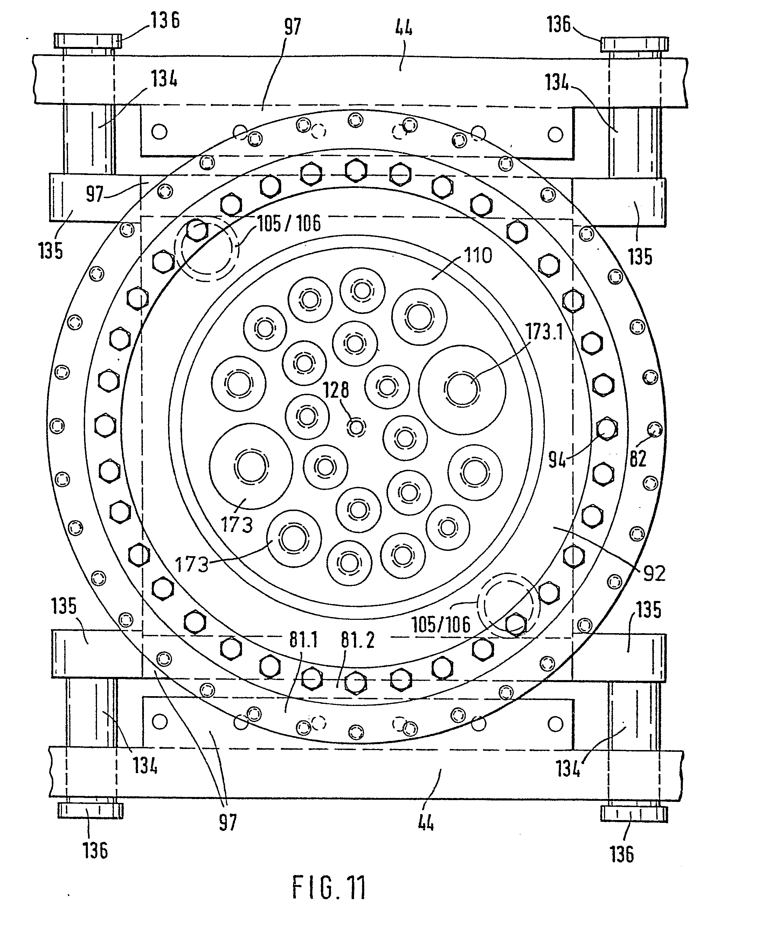

Steckverbinderbohrung 140 des jeweiligen Steckverbinders 112 ein und drückt die Schiebehülse 145 gegen die Wirkung der Druckfeder 160 zurück. Ihre Zentralöffnungen 148 und 176 schieben nunmehr über die Schiebedichtungen 158 und 183 hinweg, so daß die beiden Zentraldichtkolben 150 und 177 in den sich verschiebenden Innenraum 185 der feststehenden Kupplungshülse 175 gelangen und somit die Zentralöffnungen freigegeben sind, wie es Fig. 13 veranschaulicht. Nunmehr kann Drucköl, wie ersichtlich und bei solchen Kupplungen für andere Zwecke üblich, von der Anschlußbohrung 173.1 zum Anschlußstutzen 119 des jeweiligen Steckverbinders 112 oder umgekehrt gelangen. So können, wie Fig. 11 veranschaulicht, durch die Vielzahl der Steckverbinder die durch die eine Schiebebewegung des Tragkörpers 110 miteinander gekuppelt werden, eine Vielzahl von Antriebs- und Steuerölströmen geleitet werden. Entsprechend angeordnete elektrische Steckverbinder stecken ebenfalls.

Beim Öffnen der Kupplung geht man umgekehrt vor. Zunächst wird der Tragkörper 110 zurückgezogen. Die Zentraldichtkolben 150 und 177 verschließen die Zentralöffnungen 148 und 176. Da alle Teile ebene Flächen haben, die unmittelbar aufeinanderliegen, tritt auch kein Lecköl aus. Nach Anheben und Absenken der Halteschienen 44 können die Fahrzeugteile voneinander durch Fahren des Antriebsfahrzeuges 11 getrennt werden.

.-.-.-.-.-.

Anmelder: Firma Carl Kaelble, Gesellschaft mit
beschränkter Haftung
D-7150 <u>Backnang</u> .

Ansprüche:

1. Gleisloses Untertagefahrzeug (10) mit einer Energieversorgung (24) und zwei Hauptantriebsrädern (19) sowie mit wenigstens einem Führerstand (20) ausgerüstetem Antriebsfahrzeug (11) und ankuppelbaren Arbeits- und Beförderungsteilen (12) mit zwei Rädern (48) und Abstützmitteln (70) für den abge-kuppelten Zustand,

g e k e n n z e i c h n e t   d u r c h
folgende Merkmale:

- Das Antriebsfahrzeug (11) weist ein lenkbares und vom Boden abhebbares Spornrad (26) auf;

- Antriebs- und Energieversorgungsaggregate (24) liegen zwischen Spornrad (26) und Führerstand (20);

- der Führerstand (20) ist derart ausgestaltet, daß die Bedienung der Schalt- und Steuermittel bei nach beiden Fahrtrichtungen gewandtem Fahrer (60) gut zugänglich sind;

- das Antriebsfahrzeug (11) hat eine Gesamthöhe (56) von wenig mehr als einem aufrecht stehenden Menschen;

- die oberen Begrenzungen (59) der Energieversorgungs-bzw. Antriebsaggregate (24) und Lenkmittel liegen im gesamten Vorderbereich unterhalb der Sichtlinie (61) des Fahrers (60), welche bei etwa 10 bis 15 m den Boden trifft;

- Antriebsfahrzeug (11) und Arbeits- und Beförderungs-teil (12) sind über ein Knickgelenk (14, 15) mit Lenkzylindern (35) und eine Trennkupplung (13) verbunden;

- im Endbereich (46) wenigstens eines Arbeits- und Beförderungsteiles (12) sind lenkbare Räder (48) vorgesehen;

- die lenkbaren Räder (48) des Arbeits- und Beförderungsteiles sind antreibbar (50).

2. Untertagefahrzeug nach Anspruch 1,
d a d u r c h  g e k e n n z e i c h n e t ,
daß das Antriebsfahrzeug (11) ein schlagwettergeschütztes Antriebsaggregat (24) mit Hydraulikpumpen aufweist.

3. Untertagefahrzeug nach Anspruch 1 oder 2,
d a d u r c h  g e k e n n z e i c h n e t ,
daß das Antriebsfahrzeug (11) ein einschwenkbares,
lenkbares Spornrad (26) aufweist, welches vor den
Antriebsaggregaten (24) angeordnet ist.

4. Untertagefahrzeug nach einem der vorstehenden
Ansprüche,
d a d u r c h  g e k e n n z e i c h n e t ,
daß das Antriebsfahrzeug (11) den Antriebsrädern (19)
benachbart ein stabiles Knickgelenk (33) mit
vertikaler Gelenkachse (15) und im Bereich unmittelbar hinter den Antriebsrädern (19) an Lenkzylinderlagern (36) angelenkten Lenkzylindern (35) aufweist, welche an dem am antriebsfahrzeugfesten
Antriebs-Kupplungsteil (40) der Kupplung (13)
angreifen.

5. Untertagefahrzeug nach einem der vorstehenden Ansprüche,
d a d u r c h  g e k e n n z e i c h n e t ,
daß das Antriebsfahrzeug (11) einen Wendesitz (22)
und zwei Lenkräder (21.1, 21.2) aufweist.

6. Untertagefahrzeug nach einem der vorstehenden Ansprüche,
d a d u r c h  g e k e n n z e i c h n e t ,
daß im Bereich der Kupplung (13) und Knicklenkung (14)
zwischen Antriebsfahrzeug (11) und Arbeits- und
Beförderungsteil (12) ein Drehgelenk (81) mit horizontaler Drehachse (80) vorgesehen ist.

7. Untertagefahrzeug nach Anspruch 6, d a d u r c h g e k e n n z e i c h n e t , daß die Achsen bzw. Radlager zur Verwendung der verfügbaren Gesamthöhe (56) in den zu befahrenden Strecken ungefedert am Rahmen befestigt sind.

8. Untertagefahrzeug nach einem der vorstehenden Ansprüche, d a d u r c h g e k e n n z e i c h n e t , daß der Antriebs-Kupplungsteil (40) um eine in Fahrtrichtung in der Fahrzeugmittelebene (23) liegende Drehgelenkachse (80) verdrehbar in dem beweglichen Knickgelenkteil (37) gelagert ist.

9. Untertagefahrzeug nach einem der vorstehenden Ansprüche, d a d u r c h g e k e n n z e i c h n e t , daß zwischen Antriebs-Kupplungsteil (40) und beweglichen Knickgelenkteil (37) ein die Drehbewegung steuerndes Ferneinstellorgan vorgesehen ist, welches für die Fahrt zur freien Drehbarkeit abschaltbar ist.

10. Untertagefahrzeug nach einem der vorstehenden Ansprüche, d a d u r c h g e k e n n z e i c h n e t , daß dem Drehgelenk (80/81) Begrenzungsanschläge für einen gesamten Drehwinkel von etwa ± 10 bis 15° zugeordnet sind.

11. Untertagefahrzeug nach einem der vorstehenden Ansprüche, d a d u r c h g e k e n n z e i c h n e t , daß die Kupplung (13) mit die gesamten mechanischen Kräfte aufnehmenden Eingriffselementen (Halteschienen 44) und ⋯ ⋅ beim Öffnen verschließenden Hydraulik-Steckverbindern (112) ausgestattet ist.

12. Untertagefahrzeug nach einem der vorstehenden Ansprüche, d a d u r c h g e k e n n z e i c h n e t , daß fernbetätigbar kuppelnde elektrische Steckverbindungen in der Kupplung (13) vorgesehen sind.

13. Untertagefahrzeug (10), insbesondere nach einem oder mehreren der vorstehenden Ansprüche, mit einer Mehrfachkupplung (13) für Teile von hydraulisch angetriebenen und/oder betätigten Fahrzeugeinrichtungen(50) mit zwei trennbaren Kupplungsgrundkörpern (92, 98), mechanischen Zentrier- und Halteeinrichtungen (105,106, 95, 44) sowie einer Mehrzahl von Steckverbindern (112) für Hydraulikleitungen (113), die für das Öffnen und Schließen Schiebeelemente aufweisen, die durch eine axiale Kupplungsbewegung betätigt werden, d a d u r c h   g e k e n n z e i c h n e t , daß die Steckverbinder (112) je Leitung (113) im einen Teil eine Schiebehülse (145) und eine ihre Zentralöffnung (148) verschließenden feststehenden Zentraldichtkolben (150) und im anderen Kupplungsteil (40, 110) einen beweglichen Zentraldichtkolben (177) und eine feststehende Kupplungshülse (175) aufweisen.

14. Untertagefahrzeug nach Anspruch 13, d a d u r c h   g e k e n n z e i c h n e t , daß Zentraldichtkolben (150, 177) und feststehende und verschiebbare Kupplungshülsen (175, 145) in der Trennstellung in einer gemeinsamen Ebene (43) je Hydraulikleitung (113) enden und alle Schiebeelemente der Steckverbinder (112) gleiche Schiebewege haben.

15. Untertagefahrzeug nach Anspruch 13 oder 14, d a d u r c h   g e k e n n z e i c h n e t , daß den Schiebehülsen (145) und den beweglichen Zentraldichtkolben (177) Druckfedern (160, 179) zugeordnet sind, gegen deren Kraft sie beim Einkuppeln verschoben und mittels deren Kraft sie beim Entkuppeln in die Verschlußstellung zurückgeschoben werden.

16. Untertagefahrzeug nach einem der vorstehenden Ansprüche, d a d u r c h   g e k e n n z e i c h n e t , daß der feststehenden Kupplungshülse (175) eine gegen die Kraft einer Feder (187) verschiebbare Schutzhülse (186)

0127146

zugeordnet ist, die die Mantelfläche (144) der
Kupplungshülse (175) mit einem Schmutzabstreifer (191)
umgibt beim Einkuppeln zurückgeschoben wird.

17. Untertagefahrzeug nach einem der vorstehenden Ansprüche,
d a d u r c h   g e k e n n z e i c h n e t ,
daß die Trennebene (43) der Kupplungsgrundkörper (92, 98;
110, 111) und die Trennebene der Steckverbinder (112)
im gekuppelten Zustand zusammenfallen.

18. Untertagefahrzeug nach einem der vorstehenden Ansprüche,
d a d u r c h   g e k e n n z e i c h n e t ,
daß die Zentraldichtkolben (150; 177) elastische Dichtelemente (Schiebedichtungen 158, 183) aufweisen.

19. Untertagefahrzeug nach einem der vorstehenden Ansprüche,
d a d u r c h   g e k e n n z e i c h n e t ,
daß in den Steckverbinderbohrungen (140) der Schiebehülsen (145) in die Wandung eingelassene Hochdruck
abdichtende Schiebedichtungen (142) vorgesehen sind.

20. Untertagefahrzeug nach einem der vorstehnden Ansprüche,
d a d u r c h   g e k e n n z e i c h n e t ,
daß in den Kupplungsgrundkörpern (92, 98) mindestens
zwei Paare von zueinander passenden Zentrierzapfen (105)
und Zentrieraufnahmeöffnungen (106) vorgesehen sind,
die vorzugsweise bezüglich des Mittelpunktes (Drehgelenkachse 80) der ganzen Kupplung (13; 40, 41)
diagonal gegenüber angeordnet sind.

21. Untertagefahrzeug nach einem der vorstehenden Ansprüche,
d a d u r c h   g e k e n n z e i c h n e t ,
daß die am Antriebsfahrzeug (11) angeordneten Kupplungselemente (92, 110, 95, 44) um eine Drehgelenkachse (80)
drehbar und vorzugsweise mit die freie Drehung auch
zulassenden Ferneinstellmitteln ausrichtbar angeordnet
sind.

0127146

22. Untertagefahrzeug nach Anspruch 21,
    d a d u r c h   g e k e n n z e i c h n e t ,
    daß für die Drehbarkeit als Drehlager ein die
    Kupplungsteile umgebendes Wälz-Dreh-Lager (Kugellager 81) für Mehr-Richtungsbelastung vorgesehen ist.

23. Untertagefahrzeug nach einem der vorstehenden Ansprüche,
    d a d u r c h   g e k e n n z e i c h n e t ,
    daß die Teile der Steckverbinder (112) wenigstens
    der einen Kupplungsseite (Antriebs-Kupplungsteil 40)
    in einem außen zylindrischen Tragkörper (110) angeordnet sind, der in einer Bohrung des Kupplungsgrundkörpers (92) nicht verdrehbar, jedoch axial verschiebbar gelagert ist.

24. Untertagefahrzeug nach Anspruch 23,
    d a d u r c h   g e k e n n z e i c h n e t ,
    daß der die Teile der Steckverbinder (112) tragende,
    verschiebbare Tragkörper (110) am Antriebsfahrzeug (11)
    vorgesehen und mittels wenigstens eines, vorzugsweise
    zentral angreifenden hydraulischen Verschiebezylinders
    (125) um den Schiebeweg der Kupplungselemente verschiebbar angeordnet ist.

25. Untertagefahrzeug nach Anspruch 24,
    d a d u r c h   g e k e n n z e i c h n e t ,
    daß der Verschiebezylinder (125) an einem beiderseits
    einer Tragplattenbohrung (133) gelagerten Träger (131)
    abgestützt ist.

26. Untertagefahrzeug nach einem der vorstehenden Ansprüche,
    d a d u r c h   g e k e n n z e i c h n e t ,
    daß dem Drehlager Verdrehungen von $\pm$ 10 bis 15° zu-
    lassende Drehbegrenzungsanschläge zugeordnet sind.

27. Untertagefahrzeug nach einem der vorstehenden Ansprüche,
d a d u r c h   g e k e n n z e i c h n e t ,
daß an den beiden Kupplungsgrundkörpern (92, 98)
mechanische Zentrier- und Halteeinrichtungen (105, 106;
95, 97) und fernbetätigbare Halteelemente (44, 102, 103)
angeordnet sind, die nach dem Eingreifen der Zentriermittel (105, 106) die mechanische Verbindung der beiden
Kupplungsgrundkörper (92, 98) herstellen.

28. Untertagefahrzeug nach Anspruch 27,
d a d u r c h   g e k e n n z e i c h n e t ,
daß als Bestandteile der mechanischen Zentrier- und
Halteelemente an jedem Kupplungsgrundkörper (92, 98)
auswärts ragende Schenkel (95) vorgesehen sind, die
von wegbewegbaren klauenförmigen Übergreifeinrichtungen
im gekuppelten Zustand zusammengehalten werden.

29. Untertagefahrzeug nach Anspruch 28,
d a d u r c h   g e k e n n z e i c h n e t ,
daß die auswärts ragenden Schenkel (95) als keilförmige Schienen (95, 97) ausgebildet sind, die
von U-förmigen Halteschienen (44, 97) übergriffen
werden.

30. Untertagefahrzeug nach Anspruch 29,
d a d u r c h   g e k e n n z e i c h n e t ,
daß die keilförmigen Schienen (95, 97) und die U-förmigen
Halteschienen (44, 97) horizontal angeordnet sind
und die U-förmigen Halteschienen (44) im Bereich
ihrer Enden (101) Betätigungseinrichtungen (103, 102)
aufweisen.

31. Untertagefahrzeug nach Anspruch 30,
d a d u r c h   g e k e n n z e i c h n e t ,
daß die Betätigungseinrichtungen auf jeder Seite mit
zwischen den U-förmigen Halteschienen(44) eingehängten,
je zwei Zug-Federspeichern (102) und je einen gegen
die Federspeicher (102) arbeitenden hydraulischen
Betätigungszylinder (103) gebildet sind.            ./8

0127146

32. Untertagefahrzeug nach einem der vorstehenden Ansprüche, d a d u r c h   g e k e n n z e i c h n e t , daß die Schenkel (95) und die U-förmigen Halteschienen (44) austauschbare Keilleisten (97) aufweisen.

33. Untertagefahrzeug nach einem der vorstehnden Ansprüche, d a d u r c h   g e k e n n z e i c h n e t , daß der Kupplungsträger (Tragplatte 87) Bestandteil des Knickgelenks (14, 35) mit Vertikalachse(15) zwischen Antriebsfahrzeug (11) und Arbeits- und Beförderungsteil (12) ist.

34. Untertagefahrzeug nach einem der vorstehenden Ansprüche, d a d u r c h   g e k e n n z e i c h n e t , daß die Räder (19, 48) von Antriebsfahrzeug (11) und ggf. Arbeits- und Beförderungsteil (12) mit hydraulischen Einzelantrieben (50) ausgestattet sind.

35. Untertagefahrzeug nach einem der vorstehenden Ansprüche, d a d u r c h   g e k e n n z e i c h n e t , daß die Räder (48) des Arbeits- und Beförderungsteiles (12) auf lenkbaren Achsschenkeln gelagert sind.

36. Untertagefahrzeug nach einem der vorstehenden Ansprüche, d a d u r c h   g e k e n n z e i c h n e t , daß am Ende (46) des Arbeits- und Beförderungsteiles (12.1, 12.2, 12.3) ein weiterer Führerstand mit Steuer- und Lenkmitteln (21.3) vorgesehen ist.

37. Untertagefahrzeug nach einem der vorstehenden Ansprüche, d a d u r c h   g e k e n n z e i c h n e t , daß ein als Personenbeförderungsteil (12.1) ausgebildetes Arbeits- und Beförderungsteil (12) mit wechselweise in gleicher oder unterschiedlicher Höhe angeordneten Sitzbänken (54) ausgestattet ist.

38. Untertagefahrzeug nach einem der vorstehenden Ansprüche, d a d u r c h   g e k e n n z e i c h n e t , daß ein Arbeits- und Beförderungsteil (12.2) vorgesehen ist, auf welchem im Bereich der Räder (48) ein schwenkbarer Ladekran (72) und im Bereich zwischen Rädern (48) und Kupplung (13/41)ein Aufnahmeraum mit Ladepritsche (74) und/oder Aufnahmemitteln (75) für Wechselcontainer (71) vorgesehen ist.

39. Untertagefahrzeug nach einem der vorstehenden Ansprüche, d a d u r c h   g e k e n n z e i c h n e t , daß ein Antriebs- und Beförderungsteil (12) als Serviceeinheit mit Behältern, Betankungseinrichtungen und Werkzeugaufnahmen und Aufnahmen für Treib- und Versorgungsstoffe ausgestattet ist.

40. Untertagefahrzeug nach einem der vorstehenden Ansprüche, d a d u r c h   g e k e n n z e i c h n e t , daß ein Arbeits- und Beförderungsteil (12.3) mit Kippmulden (76) ausgestattet ist.

41. Untertagefahrzeug, d a d u r c h   g e k e n n z e i c h n e t , daß das Arbeits- und Beförderungsteil(12) hydraulisch ausfahrbare Stützfüße (70) aufweist.

42. Untertagefahrzeug nach Anspruch 38, d a d u r c h   g e k e n n z e i c h n e t , daß dem Ladekran (72) hydraulisch ausfahrbare Zusatzstützfüße (77) zugeordnet sind.

43. Untertagefahrzeug nach einem der vorstehenden Ansprüche, d a d u r c h   g e k e n n z e i c h n e t , daß das Untertagefahrzeug (10) im Grundriß von Antriebsfahrzeug (11) und wenigstens einem Arbeits- und Beförderungsteil (12) im Bereich der Ecken (30, 69) der Enden des zusammengekuppelten Fahrzeuges entsprechend dem kleinsten Wendekreis (66) nahe den äußersten Rädern (26, 48) nur geringfügig über die eingeschlagenen Räder (26, 48) überstehend abgeschnitten ist.

PATENTANWALT DIPL.-ING. GERD UTERMANN 0127146
71 HEILBRONN, Postfach 3525, Kilianstr. 7 (Kilianspassage)
Tel. (07131) 82828, Telex/Teletex 728 814 patu d
BW-Bank Heilbronn: 701 17106 00 (BLZ 620 300 50) Postscheck Stuttgart: 43016-704

Europäische Patentanmeldung                    K 42. 12 EP 27
                                               24. Mai 1984/1S

Anmelder:     Carl Kaelble, Gesell-
              schaft mit beschränkter Haftung
              Wilhelmstraße 44
              Postfach     1320

              D-7150 Backnang

Bezeichnung:  Gleisloses Untertagefahrzeug

Bezugszeichenliste:

| | | | |
|---|---|---|---|
| 10 | Untertagefahrzeug | 24 | Antriebsaggregat |
| 11 | Antriebsfahrzeug | 26 | Spornrad |
| 12 | Arbeits- und Beförderungs-teil | 27 | Achse |
| | | 28 | Spornradlenkachse |
| 12.1 | Personenbeförderungsteil | 29 | Spornradeinheit |
| 12.2 | Arbeits- und Beförderungs-teil(mit Kran für Wechselcontainer) | 30 | vordere Eckbe-grenzung |
| 12.3 | Arbeits- und Beförderungs-teil (mit Kippmulde) | 31 | Fahrzeugbreite |
| 13 | Kupplung | 32 | Endbereich |
| 14 | Knicklenkung | 33 | Knickgelenk |
| 15 | Gelenkachse | | |
| 16 | Abschnitt/hinterster | | |
| 17 | Abschnitt/mittlerer | 35 | Lenkzylinder |
| 18 | Abschnitt/vorderster | 36 | Lenkzylinderlager |
| 19 | Antriebsrad | 37 | beweglicher Knick-gelenkteil |
| 19.1 | Antriebsachse | | |
| 20 | Führerstand | 40 | Antriebs-Kupplungsteil |
| 21.1 | Lenkrad | 41 | Beförderungs-Kupplungsteil |
| 21.2 | Lenkrad | | |
| 21.3 | Lenkrad | 42 | Rahmen |
| 22 | Wendesitz | 43 | Kupplungsebene |
| 23 | Längsmitte/Mittelachse | 44 | Halteschiene |

./2

24. Mai 1984/15

| 46 | Ende |
| 47 | Fahrersitz |
| 48 | Rad |
| 49 | Schwenkachse |
| 50 | Hydromotor |
| 51 | Strebe |
| 52 | Schutzdach |
| 53 | Innenraum |
| 54 | Bank |
| 54.1 | Bank |
| 54.2 | Bank |
| 55 | Knieraum |
| 56 | Fahrzeughöhe |
| 57 | Länge von 12.1 |
| 58 | Länge von 11 |
| 59 | obere Begrenzungslinie |
| 60 | Fahrer |
| 61 | Sichtlinie |
| 62 | untere Kante |
| 65 | Stollen |
| 66 | Wenderadius |
| 67 | Stollenbreite |
| 68 | Außenwand |
| 69 | hintere abgeschrägte Eckbegrenzung |
| 70 | Stützfuß |
| 71 | Container |
| 72 | Ladekran |
| 72.1 | Kransäule |
| 73 | Rahmen |
| 74 | Ladepritsche |
| 75 | Aufnahmemittel |
| 76 | Kippmulde |
| 77 | Zusatzstützfuß |
| 80 | Drehgelenkachse |
| 81 | Kugellager/ Wälz-Dreh-Lager |
| 81.1 | Außenring |
| 81.2 | Innenring |

| 82 | Schraube |
| 83 | Zentrierkragen |
| 85 | Stützarm |
| 85.1 | Stützarmgabel |
| 85.2 | Stützarmgabel |
| 86 | Gelenkarm |
| 86.1 | Gelenkarm |
| 86.2 | Gelenkarm |
| 87 | Tragplatte |
| 88 | Knickgelenkbolzen |
| 90 | Gelenkraum |
| 92 | Kupplungsgrundkörper |
| 92.1 | Kugellageranschlußteil |
| 92.2 | Schweißnaht |
| 92.3 | mechanischer Stützteil |
| 93 | Zentrierung |
| 94 | Schraube |
| 95 | Schenkel |
| 95.1 | Schenkel |
| 95.2 | Schenkel |
| 96 | Anlagefläche |
| 97 | Keilleiste |
| 97.2 | Keilleiste |
| 98 | Kupplungsgrundkörper |
| 101 | Einhängeende |
| 102 | Zug-Federspeicher |
| 103 | Betätigungszylinder |
| 104 | Bolzen |
| 105 | Zentrierzapfen |
| 106 | Zentrieraufnahmeöffnung |

| | |
|---|---|
| 110 | Tragkörper |
| 111 | Tragkörper |
| 112 | Steckverbinder |
| 113 | Hydraulikleitung |
| 114 | Durchführöffnung |
| 115 | Aufnahmebohrung |
| 116 | Schraube |
| 117 | Stift |
| 118 | Flansch |
| 119 | Anschlußstutzen |
| 121 | Lagerbohrung |
| 125 | Verschiebezylinder |
| 126 | Auge |
| 127 | Gabelverbindungselement |
| 128 | Gewindebohrung |
| 129 | Befestigungsauge |
| 130 | Gabelarm |
| 131 | V-förmiger Träger |
| 132 | Bolzen |
| 133 | Tragplattenbohrung |
| 134 | Halteschienen-Führungsbolzen |
| 135 | Bolzenhalter |
| 136 | Anschlagbund |
| 140 | Steckverbinderbohrung |
| 140.1 | Steckverbinderbohrung |
| 140.2 | Steckverbinderbohrung |
| 140.3 | Steckverbinderbohrung |
| 140.4 | Bohrungsende |
| 140.5 | Stützschulter |
| 141 | Anschlagabsatz |
| 142 | Schiebedichtung |
| 143 | Haltering |
| 144 | Dichtungsdurchmesser |
| 145 | Schiebehülse |
| 146 | Anschlagschulter |
| 146.1 | Führungsschaft |
| 146.2 | Dichtungsansatz |
| 146.3 | Dichtungsfläche |
| 146.4 | Einführschräge |
| 148 | Zentralöffnung |
| 150 | Zentraldichtkolben |
| 150.1 | Anschlagfläche |
| 151 | Stützstange |
| 152 | Halteeinsatz |
| 152.1 | Öldurchtrittsbohrung |
| 152.2 | Anschlagschulter |
| 154 | Dichtung |
| 155 | Haltescheibe |
| 156 | Schraube |
| 157 | Rückseite |
| 158 | Schiebedichtung |
| 160 | Druckfeder |
| 170 | Bohrung |
| 171 | Kupplungshülsenhaltehülse |
| 171.1 | Kragen |
| 172 | Schulter |
| 173 | Anschluß- und Halteplatte |
| 173.1 | Anschlußbohrung |
| 174 | Gewinde |
| 175 | Kupplungshülse (feststehend) |
| 175.1 | Einführschräge |
| 175.2 | Anlagefläche |
| 176 | Zentralöffnung |
| 177 | Zentraldichtkolben |
| 177.1 | Führungsschaft |
| 178 | Gleithülse |
| 179 | Druckfeder |
| 180 | Halteelement |
| 181 | Durchbrechung |
| 183 | Schiebedichtung |
| 185 | Innenraum |

./4

- 4 -

0127146

186    Schutzhülse

186.1  Anschlagkragen

187    Druckfeder

188    Federaufnahmeraum

189    Federaufnahmeraum

190    Abdeckplatte

191    Schmutzabstreifer

FIG. 1

FIG. 2

FIG.4

FIG.5

FIG.3

0127146

FIG.7

12.3

76

48          48

FIG.6

12.3                              76

13   41                              47   21.3
                                    48

70                              73

# FIG.8

0127146

FIG. 9

FIG. 10

0127146

0127146

FIG. 11

FIG.12

FIG.13

0127146